(19) Europäisches Patentamt
European Patent Office
Office européen des brevets

(11) **EP 2 983 270 A1**

(12) **EUROPEAN PATENT APPLICATION**
published in accordance with Art. 153(4) EPC

(43) Date of publication:
**10.02.2016 Bulletin 2016/06**

(51) Int Cl.:
*H02J 7/10* (2006.01)      *B60L 11/14* (2006.01)
*B60L 11/18* (2006.01)      *H01M 10/44* (2006.01)
*H01M 10/48* (2006.01)      *H02M 3/155* (2006.01)

(21) Application number: **14780341.5**

(22) Date of filing: **24.03.2014**

(86) International application number:
**PCT/JP2014/057962**

(87) International publication number:
**WO 2014/162907 (09.10.2014 Gazette 2014/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **03.04.2013   JP 2013077983
17.06.2013   JP 2013126888
17.06.2013   JP 2013126889**

(71) Applicants:
• **AutoNetworks Technologies, Ltd.
Yokkaichi-shi, Mie 510-8503 (JP)**
• **Sumitomo Wiring Systems, Ltd.
Yokkaichi-shi, Mie 510-8503 (JP)**

• **Sumitomo Electric Industries, Ltd.
Osaka-shi, Osaka 541-0041 (JP)**

(72) Inventors:
• **YASUNORI, Hiromichi
Yokkaichi-shi
Mie 510-8503 (JP)**
• **TANIGUCHI, Tomohiro
Yokkaichi-shi
Mie 510-8503 (JP)**

(74) Representative: **Horn Kleimann Waitzhofer
Patentanwälte PartG mbB
Ganghoferstrasse 29a
80339 München (DE)**

(54) **CONTROL DEVICE, POWER SUPPLY CONTROL DEVICE, CHARGE CONTROL METHOD, CHARGE CONTROL DEVICE, AND POWER SUPPLY DEVICE FOR VEHICLE**

(57)    A control apparatus that is capable of quickly charging a storage battery and allowing the storage battery to store a large amount of electric power is provided. A control apparatus 1 controls charging from a power generator 22 to a storage battery 23. A switch 10 is provided on a first charge channel via which the power generator 22 charges the storage battery 23, and a DCDC converter 11 is provided on a second charge channel via which the power generator 22 charges the storage battery 23. The DCDC converter 11 steps up a voltage generated by the power generator 22, and applies the stepped-up voltage to the storage battery 23 via an electric wire 21. A control unit 14 controls the switch 10 and the DCDC converter 11 such that, when a charge current value detected by an electric current detection unit 12 becomes smaller than a predetermined value under a condition where the storage battery 23 is being charged via the first charge channel, charging to the storage battery 23 is switched to charging via the second charge channel.

FIG. 1

## Description

Technical Field

The present invention relates to: a control apparatus that controls charging that is performed by supplying electric power generated by a power generator to a storage battery; a power supply control apparatus that controls power supply from a power generator to a storage battery and a load and power supply from the storage battery to the load; a charge control method for a charge control apparatus that includes a voltage conversion means for converting, as needed, a voltage generated by an on-board power generator, providing the converted voltage to an electric load group, and charging a power storage apparatus, the on-board power generator generating electric power when braking the vehicle, and that controls charging to a second power storage apparatus that is charged with a voltage generated by the on-board power generator; a charge control apparatus; and vehicle power supply apparatus.

Background Art

Vehicles such as HEVs (Hybrid Electric Vehicles) and EVs (Electric Vehicles) are now common. These vehicles are mounted with a power supply apparatus having a power generator that generates electric power by converting the kinetic energy of the vehicle into electric power when the vehicle reduces its speed, and a storage battery that stores therein the electric power generated by the power generator (for example, see Patent Document 1).

In such a power supply apparatus, the storage battery supplies the electric power stored therein to an on-board load such as an audio device or an instrument, and therefore when the vehicle reduces its speed, the kinetic energy of the vehicle is effectively used without being consumed by the friction between the tires and the ground.

Also, vehicles such as HEVs (Hybrid Electric Vehicles) and EVs (Electric Vehicles) are now mounted with a power supply system in which a power generator generates regenerative electric power by converting the kinetic energy of the vehicle to electric power when the vehicle reduces its speed, and supplies the generated regenerative electric power to the storage battery and loads (for example, see Patent Document 1).

In the power supply system described in Patent Document 2, the positive terminal of a lead-acid battery, which serves as a storage battery, and one end of a switch are connected to the positive terminal of the power generator, and the positive terminal of a lithium battery, which serves as a storage battery, and one end of a load are connected to the other end of the switch. The respective negative terminals of the power generator, the lead-acid battery, and the lithium battery, and the other end of the load are grounded.

In the power supply system described in Patent Document 2, the power generator is configured to generate a DC regenerative power, and power supply from the power generator to the lithium battery is controlled by turning ON and OFF the switch.

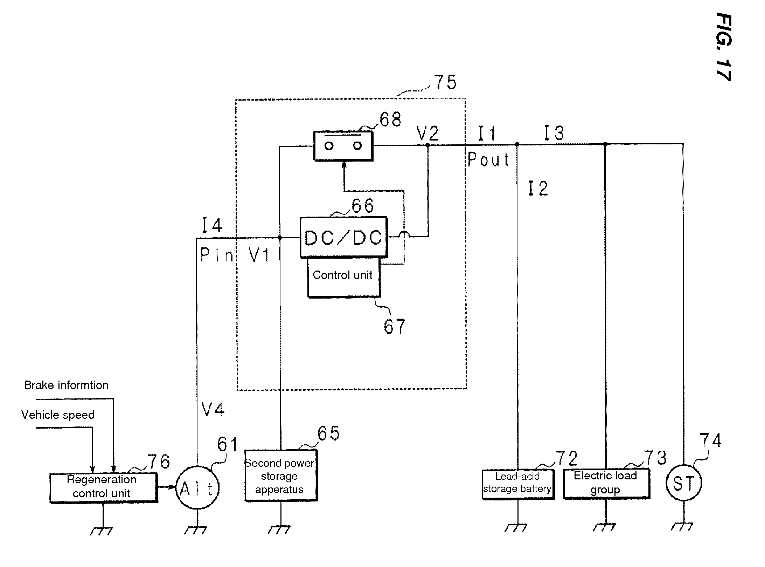

FIG. 17 is a block diagram showing an example of a schematic configuration of a conventional charge control apparatus.

In this charge control apparatus, a regeneration control unit 76, to which a drive control system provides brake information indicating the operating conditions of the brake of the vehicle and vehicle speed information, performs regeneration control for an alternator (on-board power generator, AC power generator) 1 when braking the vehicle. The alternator 61 rectifies the electric power generated when braking the vehicle, and outputs it as DC power.

The electric power output by the alternator 61 charges a second power storage apparatus 65 such as a storage battery, an electric double-layer capacitor, or the like, and is also supplied to a DC/DC converter (voltage conversion means) 66. For the DC/DC converter 66, a control unit 67 performs voltage step-down or step-up control based on the input voltage detected by a built-in voltage sensor (not shown in the drawings) so that the output voltage will be appropriate. When the voltage step-down control and the voltage step-up control are unnecessary, the control unit 67 maintains a bypass relay 68 to be ON, which is connected to the DC/DC converter 66 in parallel.

The DC/DC converter 66, the control unit 67, and the bypass relay 68 constitute a charge control apparatus 75, and electric power output by the charge control apparatus 75 charges a lead-acid storage battery 72, and is also supplied to an electric load group 73 and a starter 74, which are mounted on the vehicle. The electric power output by the lead-acid storage battery 72 is supplied to the electric load group 73 and the starter 74.

Here, it is assumed that V4 denotes the output voltage value of the alternator 61 (16 V at the maximum), V1 denotes the output voltage value of the second power storage apparatus 65 (9 V at the minimum), the output voltage value of the lead-acid storage battery 72 is 12.6 V, and the maximum output electric current value of the alternator 61 is 100 A, and for the sake of convenience, it is assumed that no resistance is present.

In the case where load current I3 is 50 A for example, when Pin and Pout respectively denote the input electric power to and the output electric power from the charge control apparatus 75, then

$$Pout = 12.6 \times 50 = 630(W)$$

When V1 is at the minimum value 9V and Pin=Pout, then the input electric current value I4 required for supplying the output electric power Pout is:

$$I4=Pin/V1=630/9=70(A)$$

As a result, the maximum output electric current value of the alternator 61, which is 100 A, is greater than 70 A, and when the load current I3 is 50 A, it is possible to supply the input electric current value I4 required for supplying the output electric power Pout.

Patent Document 1 describes a power supply control apparatus of a vehicle, which includes: a first power storage apparatus that supplies electric power to a starter for starting up an engine; a power generator that converts kinetic energy to electric energy when, for example, the vehicle reduces its speed, and collects the electric energy; and a second power storage apparatus that is connected to the power generator and stores therein the power generated by the power generator.

Citation List

Patent Documents

Patent Document 1: JP 2012-240487A
Patent Document 2: JP 2011-176958A

Summary of Invention

Technical Problem

In the power supply apparatus described in Patent Document 1, however, the power generator and the storage battery are directly connected by an electric wire. The charge voltage applied to the storage battery increases along with an increase of the electric power stored in the storage battery by charging. For this reason, as charging of the storage battery progresses, the voltage difference between the voltage generated by the power generator and the charge voltage of the storage battery decreases, and accordingly the electric current flowing from the power generator to the storage battery decreases. For this reason, the power supply apparatus described in Patent Document 1 has the problem that it takes a long time to charge the storage battery.

Also, regarding the storage battery described in Patent Document 1, there is no possibility that a voltage that is equal to or greater than the voltage generated by the power generator is applied to the storage battery, and accordingly there is the problem that the electric power that the storage battery can store is small.

In the power supply system described in the Patent Document 2, the switch is controlled to be ON while the power generator is generating regenerative electric power. When the switch is ON, the power generator is connected in parallel to each of the lead-acid battery, the lithium battery, and the load.

In this situation, when the output voltage from the lead-acid battery is higher than the output voltage from the lithium battery, the current flows from the lead-acid battery to the lithium battery, and when the output voltage from the lithium battery is higher than the output voltage from the lead-acid battery, the current flows from the lithium battery to the lead-acid battery, and thus the amount of charge will be the same in the lead-acid battery and in the lithium battery.

For this reason, even when the capacity of the lithium battery is greater than the capacity of the lead-acid battery for example, the lithium battery cannot be fully charged, and the amount of charge in the lithium battery has a limit.

For the reasons described above, the power supply system described in Patent Document 1 has the problem that the lead-acid battery and the lithium battery cannot be charged efficiently.

Also, when the switch is ON, each of the lead-acid battery and the lithium battery is connected in parallel to the load, and it is therefore necessary to charge the lead-acid battery and the lithium battery at a substantially same charge voltage, and to substantially equalize the respective output voltages from the lead-acid battery and the lithium battery with each other. For this reason, the power supply system described in Patent Document 1 has the problem that it cannot drive a plurality of loads with different operating voltages, e.g., two loads, one operating at 12 V and the other at 48 V.

Also, regarding the charge control apparatus 75 described above, in the case where the output voltage value V1 of the second power storage apparatus 65 is low (the minimum value 9V), when the load current I3 is 50 A for example, it is possible to supply the input electric current value I4 required for supplying the output electric power Pout, and accordingly it is possible to supply the output electric power Pout.

However, when the load current I3 is 80 A for example, the output electric power Pout of the charge control apparatus 75 is

$$Pout=12.6 \times 80=1000(W)$$

When V1 is at the minimum value 9V and Pin=Pout, then the Input electric current value I4 required for supplying the output electric power Pout is:

$$I4=Pin/V1=1000/9=111\ (A)$$

As a result, the maximum output electric current value of the alternator 61, which is 100 A, is smaller than 111 A, and when the output voltage value V1 of the second power storage apparatus 65 is low (the minimum value 9V), there is the problem that it is impossible to supply the input electric current value I4 required for supplying the output electric power Pout, which results in a decrease of the output voltage and causes troubles of the electric load, for example the wiper stops, the light goes off, the audio device stops, and the sound volume decreases. Note that power storage apparatuses, including the second power storage apparatus, have a lower output voltage value for a smaller remaining capacity.

The present invention is made in view of such a situation, and aims to provide a control apparatus that is capable of quickly charging a storage battery and also capable of causing the storage battery to store a large amount of electric power.

The present invention is made in view of such a situation, and aims to provide a power supply control apparatus that is capable of efficiently charging a first storage battery and a second storage battery each with a different charge voltage.

Also, the present invention is made in view of the above-described situation, and aims to provide a charge control method that is unlikely to cause a decrease in supply voltage to an electric load when charging a power storage apparatus with voltage generated by an on-board power generator that generates electric power when braking the vehicle.

Also, the present invention aims to provide a charge control apparatus that is unlikely to cause a decrease in supply voltage to an electric load when charging a power storage apparatus with voltage generated by an on-board power generator that generates electric power when braking the vehicle.

Also, the present invention aims to provide a power supply apparatus for vehicles, including a charge control apparatus that is unlikely to cause a decrease in supply voltage to an electric load when charging a power storage apparatus with voltage generated by an on-board power generator that generates electric power when braking the vehicle.

Solution to Problem

A control apparatus according to a first invention is a control apparatus that controls charging from a power generator to a storage battery, including: a first charge channel and a second charge channel via which the power generator charges the storage battery; a switch that is provided in the first charge channel; a voltage step-up circuit that is provided in the second charge channel, steps up a voltage generated by the power generator, and applies the stepped-up voltage to the storage battery; an electric current detection unit that detects a charge current to the storage battery; and a control unit that controls the switch and the voltage step-up circuit so that, when a charge current value detected by the current detection unit becomes smaller than a predetermined value under a condition where the storage battery is being charged via the first charge channel, charging to the storage battery is switched to charging via the second charge channel.

In the first invention, the switch is provided in the first charge channel via which the power generator charges the storage battery, and the voltage step-up circuit, which steps up the voltage generated by the power generator and applies the stepped-up voltage to the storage battery, is provided in the second charge channel via which the power generator charges the storage battery. The current detection unit detects the charge current flowing into the storage battery. The control unit controls the switch and the voltage step-up circuit so that, when the charge current value detected by the current detection unit becomes smaller than the predetermined value under the condition where the storage battery is being charged via the first charge channel, for example under the condition where the switch is OFF and the voltage step-up circuit is stopping the voltage step-up, charging to the storage battery is switched to charging via the second charge channel. In this situation, the control unit turns OFF the switch and causes the voltage step-up circuit to start the voltage step-up, for example.

After the charge current value becomes smaller than the predetermined value and charging to the storage battery is switched to charging via the second charge channel, the control unit appropriately controls the voltage step-up range for the voltage step-up circuit, so that the charge current value can be maintained to be equal to or greater than the predetermined value and the storage battery can be quickly charged. Furthermore, since the voltage generated by the power generator is stepped up, a voltage that is greater than the voltage generated by the power generator can be applied to the storage battery. As a result, the electric power stored in the storage battery is not limited by the voltage generated by the power generator, and a large amount of electric power can be stored in the storage battery.

In a control apparatus according to a second invention, a value of current generated by the power generator is limited to be equal to or smaller than the predetermined value.

In the second invention, the power generator generates an electric current that is equal to or smaller than a predetermined value. Under the condition where the storage battery is being charged via the first charge channel, when the amount of electric power stored in the storage battery is small and the voltage applied to the storage battery is low, the voltage that the power generator can generate is high, and also, the resistance value of the electric wire used for connection of the power generator and the storage battery and the internal resistance value of the storage battery are usually sufficiently small. For this reason, current limiting is activated, and an electric current having a predetermined value flows from the power generator to the storage battery. Then, when the value of the electric current flowing into the storage battery due to the increase of the voltage applied to the storage battery becomes smaller than the predetermined value, charging to the storage battery is switched to charging via the second charge channel, and the voltage step-up circuit performs the voltage step-up. In this situation, the control unit can maintain the charge current value at the predetermined value by, for example, appropriately controlling the voltage step-up range for the voltage step-up circuit.

A control apparatus according to a third invention is a control apparatus that controls charging from a power generator to a storage battery, including: a first charge channel and a second charge channel via which the power generator charges the storage battery; a switch that is provided in the first charge channel; a voltage step-up circuit that is provided in the second charge channel, steps up a voltage generated by the power generator, and applies the stepped-up voltage to the storage battery; a voltage detection unit that detects a voltage at each of two ends of an electric wire connected to the first charge channel and the second charge channel; and a control unit that controls the switch and the voltage step-up circuit so that, when a calculation value calculated based on voltage values detected by the voltage detection unit becomes smaller than a predetermined value under a condition where the storage battery is being charged via the first charge channel, charging to the storage battery is switched to charging via the second charge channel.

In the third invention, the switch is provided in the first charge channel via which the power generator charges the storage battery, and the voltage step-up circuit, which steps up the voltage generated by the power generator and applies the stepped-up voltage to the storage battery, is provided in the second charge channel via which the power generator charges the storage battery. The voltage detection unit detects a voltage at each of the two ends of the electric wire connected to the first charge channel and the second charge channel, for example an electric wire provided on an electric current channel from the first charge channel and the second charge channel to the storage battery. The control unit controls the switch and the voltage step-up circuit so that, when the calculation value calculated based on the voltage values detected by the voltage detection unit, for example the value of the difference between the voltage values detected by the voltage detection unit, becomes smaller than a predetermined value under the condition where the storage battery is being charged via the first charge channel, for example under the condition where the switch is OFF and the voltage step-up circuit is stopping the voltage step-up, charging to the storage battery is switched to charging via the second charge channel. In this situation, the control unit turns OFF the switch and causes the voltage step-up circuit to start the voltage step-up, for example.

In the case where the calculation values is the value of the difference between the respective voltage values at the two ends of the electric wire, after the calculation value becomes smaller than the predetermined value and charging to the storage battery is switched to charging via the second charge channel, the control unit appropriately controls the voltage step-up range for the voltage step-up circuit, so that the calculation value can be maintained to be equal to or greater than the predetermined value. As a result, the charge current value can be maintained to be equal to or greater than a certain value, and accordingly the storage battery can be quickly charged. Furthermore, since the voltage generated by the power generator is stepped up, a voltage that is greater than the voltage generated by the power generator can be applied to the storage battery. As a result, the electric power stored in the storage battery is not limited by the voltage generated by the power generator, and a large amount of electric power can be stored in the storage battery.

In a control apparatus according to a fourth invention, a value of an electric current generated by the power generator has an upper limit, and the predetermined value is a calculation value calculated based on voltage values detected by the voltage detection unit when an electric current having the upper limit value flows through the electric wire.

In the fourth invention, the value of the current generated by the power generator has the upper limit. Under the condition where the storage battery is being charged via the first charge channel, when the amount of electric power stored in the storage battery is small and the voltage applied to the storage battery is low, the voltage that the power generator can generate is high, and also, the resistance value of the electric wire connected to the power generator and the storage battery and the internal resistance value of the storage battery are usually sufficiently small. For this reason, current limiting is activated, and an electric current having the upper limit value flows from the power generator to the storage battery. When the calculation value is for example the value of the difference between the respective voltage values at the two ends of the electric wire and the value of the current flowing into the storage battery due to the increase of the voltage applied to the storage battery becomes smaller than the upper limit value, the calculation value based on the voltage values detected by the voltage detection unit becomes smaller than the predetermined value. As a result, charging to the storage battery is switched to charging via the second charge channel, and the voltage step-up circuit performs the voltage step-up. In this situation, the control unit can maintain the calculation value at the predetermined value and maintain the charge current value at the upper limit value by, for example, appropriately controlling the voltage step-up range for the voltage step-up circuit.

A power supply control apparatus according to a fifth invention is a power supply control apparatus that controls power supply from a power generator to a first storage battery, a second storage battery, and a load, and power supply from the first storage battery to the load, including: a first switch that is provided on a power supply channel from the power generator to the first storage battery; a second switch that is provided on a power supply channel from the power generator to the second storage battery and the load; a voltage transformer circuit that is provided between a connection node, which is between the first storage battery and the first switch, and the load, transforms an output voltage of the power generator or the first storage battery, and applies the transformed voltage to the load; an acquisition means for acquiring first remaining capacity information and second remaining capacity information respectively indicating a remaining capacity of the first storage battery and a remaining capacity of the second storage battery; and a control means for controlling turning ON/OFF of each of the first switch and the second switch and activation/deactivation of the voltage transformer circuit, according to the remaining capacities indicated by the first remaining capacity information and the second remaining capacity information acquired by the acquisition means.

In the fifth invention, electric power is supplied from the power generator to the first storage battery via the first switch, and from the power generator to the second storage battery and the load via the second switch. The voltage transformer circuit is provided between the connection node, which is between the first storage battery and the first switch, and the load, transforms the output voltage of the power generator or the first storage battery, and applies the transformed voltage to the load.

Also, the first remaining capacity information and the second remaining capacity information respectively indicating the remaining capacity of the first storage battery and the remaining capacity of the second storage battery are acquired. ON/OFF of each of the first switch and the second switch and activation/deactivation of the voltage transformer circuit are controlled according to the acquired remaining capacities indicated by the first remaining capacity information and the second remaining capacity information. As a result, the power supply from the power generator to the first storage battery, the second storage battery, and the load, and the power supply from the first storage battery to the load are controlled.

Therefore, the first storage battery and the second storage battery can be charged individually, and accordingly the first storage battery and the second storage battery can be charged with different charge voltages. For example, it is possible that the first storage battery is charged with a predetermined voltage when the first switch is ON and the second switch is OFF, and the second storage battery is charged with a voltage that is different from the predetermined voltage when the first switch is OFF and the second switch is ON.

For this reason, the charge amount of each of the first storage battery and the second storage battery is not limited by the charge amount of the other storage battery. Furthermore, ON/OFF of each of the first switch and the second switch and activation/deactivation of the voltage transformer circuit are controlled according to the respective remaining capacities of the first storage battery and the second storage battery. Therefore, each of the first storage battery and the second storage battery can be efficiently charged, and the electric power stored by each of the first storage battery and the second storage battery can be efficiently consumed.

A power supply control apparatus according to a sixth invention includes a determination means for determining whether or not the power generator is generating regenerative electric power, wherein the control means is configured to control turning ON/OFF of each of the first switch and the second switch and activation/deactivation of the voltage transformer circuit, according to a result of a determination made by the determination means and the remaining capacities indicated by the first remaining capacity information and the second remaining capacity information acquired by the acquisition means.

In the sixth invention, ON/OFF of each of the first switch and the second switch and activation/deactivation of the voltage transformer circuit are controlled according to not only the remaining capacities indicated by the acquired first remaining capacity information and second remaining capacity information, but also the result of determination as to whether the power generator is generating regenerative electric power.

For this reason, each of the first storage battery and the second storage battery can be more efficiently charged, and the electric power stored by each of the first storage battery and the second storage battery can be more efficiently consumed.

In a power supply control apparatus according to a seventh invention, the control means is configured to, in a case where the determination means determines that regenerative electric power is being generated, turn ON both the first switch and the second switch and deactivate the voltage transformer circuit when the remaining capacity indicated by the first remaining capacity information acquired by the acquisition means is smaller than a first predetermined value and the remaining capacity indicated by the second remaining capacity information acquired by the acquisition means is smaller than a second predetermined value.

In the seventh invention, in the case where it is determined that the power generator is generating regenerative electric power, it can be assumed that the remaining capacity indicated by the acquired first remaining capacity information is smaller than the first predetermined value and the remaining capacity indicated by the acquired second remaining capacity information is smaller than the second predetermined value, i.e., the remaining capacity of the first storage battery and the remaining capacity of the second storage battery are both small. In such a situation, both the first switch and the second switch are turned ON, and the voltage transformer circuit is deactivated. As a result, regenerative electric power is supplied from the power generator to each of the first storage battery and the second storage battery.

In a power supply control apparatus according to an eighth invention, the control means is configured to, in a case where the determination means determines that regenerative electric power is being generated, turn ON the first switch, turn OFF the second switch, and activate the voltage transformer circuit when the remaining capacity indicated by the first remaining capacity information acquired by the acquisition means is smaller than a first predetermined value and the remaining capacity indicated by the second remaining capacity information acquired by the acquisition means is equal to or greater than a second predetermined value.

In the eighth invention, in the case where it is determined that the power generator is generating regenerative electric power, it can be assumed that the remaining capacity indicated by the acquired first remaining capacity information is smaller than the first predetermined value and the remaining capacity indicated by the acquired second remaining capacity information is equal to or greater than the second predetermined value, i.e., the remaining capacity of the first storage battery is small and the remaining capacity of the second storage battery is large. In such a situation, the first switch is turned ON and the second switch is turned OFF, and the voltage transformer circuit is activated. As a result, the first storage battery is supplied with regenerative electric power, and the voltage transformer circuit transforms the output voltage of the power generator and applies the transformed voltage to the load.

In a power supply control apparatus according to a ninth invention, the control means is configured to, in a case where the determination means determines that regenerative electric power is being generated, turn OFF the first switch, turn ON the second switch, and deactivate the voltage transformer circuit when the remaining capacity indicated by the first remaining capacity information acquired by the acquisition means is equal to or greater than a first predetermined value and the remaining capacity indicated by the second remaining capacity information acquired by the acquisition means is smaller than a second predetermined value.

In the ninth invention, in the case where it is determined that the power generator is generating regenerative electric power, it can be assumed that the remaining capacity indicated by the acquired first remaining capacity information is equal to or greater than the first predetermined value and the remaining capacity indicated by the acquired second remaining capacity information is smaller than the second predetermined value, i.e., the remaining capacity of the first storage battery is large and the remaining capacity of the second storage battery is small. In such a situation, the first switch is turned OFF and the second switch is turned ON, and the voltage transformer circuit is deactivated. As a result, the second storage battery and the load are supplied with regenerative electric power.

In a power supply control apparatus according to a tenth invention, the control means is configured to, in a case where the determination means determines that regenerative electric power is being generated, turn OFF both the first switch and the second switch and activate the voltage transformer circuit when the remaining capacity indicated by the first remaining capacity information acquired by the acquisition means is equal to or greater than a first predetermined value and the remaining capacity indicated by the second remaining capacity information acquired by the acquisition means is equal to or greater than a second predetermined value.

In the tenth invention, in the case where it is determined that the power generator is generating regenerative electric power, it can be assumed that the remaining capacity indicated by the acquired first remaining capacity information is equal to or greater than the first predetermined value and the remaining capacity indicated by the acquired second remaining capacity information is equal to or greater than the second predetermined value, i.e., the remaining capacity of the first storage battery and the remaining capacity of the second storage battery are both large. In such a situation, the first switch and the second switch are both turned OFF, and the voltage transformer circuit is activated. As a result, the first storage battery and the second storage battery are not supplied with regenerative electric power, and the voltage transformer circuit transforms the output voltage of the first storage battery, and applies the transformed voltage to the load.

A power supply control apparatus according to an eleventh invention includes a driving means for, in a case where the determination means determines that regenerative electric power is not being generated, driving the power generator when the remaining capacity indicated by the first remaining capacity information acquired by the acquisition means is smaller than a first predetermined value and the remaining capacity indicated by the second remaining capacity information acquired by the acquisition means is smaller than a second predetermined value, wherein the control means is configured to, in a case where the determination means determines that regenerative electric power is not being generated, turn ON both the first switch and the second switch and deactivate the voltage transformer circuit when the remaining capacity indicated by the first remaining capacity information acquired by the acquisition means is smaller than a first predetermined value and the remaining capacity indicated by the second remaining capacity information acquired by the acquisition means is smaller than a second predetermined value.

In the eleventh invention, in the case where it is determined that the power generator is not generating regenerative electric power, it can be assumed that the remaining capacity indicated by the acquired first remaining capacity information is smaller than the first predetermined value and the remaining capacity indicated by the acquired second remaining capacity information is smaller than the second predetermined value, i.e., the remaining capacity of the first storage battery and the remaining capacity of the second storage battery are both small. In such a situation, both the first switch and the second switch are turned ON, the voltage transformer circuit is deactivated, and the power generator is driven. As a result, the electric power generated by the power generator is supplied to the first storage battery, the second storage battery, and the load.

In a power supply control apparatus according to a twelfth invention, the control means is configured to, in a case where the determination means determines that regenerative electric power is not being generated, turn OFF both the first switch and the second switch and deactivate the voltage transformer circuit when the remaining capacity indicated by the first remaining capacity information acquired by the acquisition means is smaller than a first predetermined value and the remaining capacity indicated by the second remaining capacity information acquired by the acquisition means is equal to or greater than a second predetermined value.

In the twelfth invention, in the case where it is determined that the power generator is not generating regenerative electric power, it can be assumed that the remaining capacity indicated by the acquired first remaining capacity information is smaller than the first predetermined value and the remaining capacity indicated by the acquired second remaining capacity information is equal to or greater than the second predetermined value, i.e., the remaining capacity of the first storage battery is small and the remaining capacity of the second storage battery is large. In such a situation, both the first switch and the second switch are turned OFF, and the voltage transformer circuit is deactivated. As a result, electric power is supplied from the second storage battery to the load.

In a power supply control apparatus according to a thirteenth invention, the control means is configured to, in a case where the determination means determines that regenerative electric power is not being generated, turn OFF both the first switch and the second switch and activate the voltage transformer circuit when the remaining capacity indicated by the first remaining capacity information acquired by the acquisition means is equal to or greater than a first predetermined value.

In the thirteenth invention, in the case where it is determined that the power generator is not generating regenerative electric power, it can be assumed that the remaining capacity indicated by the acquired first remaining capacity information is equal to or greater than the first predetermined value, i.e., the remaining capacity of the first storage battery is large. In such a situation, both the first switch and the second switch are turned OFF, and the voltage transformer circuit is activated. As a result, the voltage transformer circuit transforms the output voltage of the first storage battery, and applies the transformed voltage to the load.

A charge control method according to a fourteenth invention is a charge control method for a charge control apparatus, the charge control apparatus including: a voltage conversion means for converting, as needed, a voltage generated and output by an on-board power generator, providing the converted voltage to an electric load group, and charging a power storage apparatus, the on-board power generator generating electric power when braking the vehicle; a means for detecting an input voltage value V1 to the voltage conversion means; a voltage detection means and an electric current detection means for detecting an output voltage value V2 and an output electric current value I1 of the voltage conversion means, respectively; and a means for detecting an input/output electric current value I2 of the power storage apparatus, wherein the charge control apparatus controls charging to a second power storage apparatus that is charged with a voltage generated and output by the on-board power generator, the charge control method including: preparing a switch that turns ON/OFF charging to the second power storage apparatus; calculating an electric current value I3 required by the power storage apparatus and the electric load group, based on I1 and I2; calculating an electric current value I4 to be output by the on-board power generator, based on V2, V1, and I3; determining whether or not I4 so calculated is greater than a previously-provided maximum output electric current value of the on-board power generator; and when determining that I4 is greater than the maximum output electric current value, turning OFF the switch or performing PWM control.

A charge control apparatus according to a fifteenth invention includes: a voltage conversion means for converting, as needed, a voltage generated and output by an on-board power generator, providing the converted voltage to an electric load group, and charging a power storage apparatus, the on-board power generator generating electric power when braking the vehicle; a means for detecting an input voltage value V1 to the voltage conversion means; a voltage detection means and an electric current detection means for detecting an output voltage value V2 and an output electric current value I1 of the voltage conversion means, respectively; and a means for detecting an input/output electric current value I2 of the power storage apparatus, wherein the charge control apparatus controls charging to a second power storage apparatus that is charged with a voltage generated and output by the on-board power generator, the charge control apparatus including: a switch that turns ON/OFF charging to the second power storage apparatus; a means for calculating an electric current value I3 required by the power storage apparatus and the electric load group, based on I1 and I2; a means for calculating an electric current value I4 to be output by the on-board power generator, based on V2, V1, and I3; and a determination means for determining whether or not I4 calculated by the means is greater than a previously-provided maximum output electric current value of the on-board power generator, wherein the charge control apparatus is configured such that, when the determination means determines that I4 is greater than the maximum output electric current value, the switch is turned OFF or PWM control is performed.

In the charge control method according to the fourteenth invention and the charge control apparatus according to the fifteenth invention, the voltage conversion means converts, as needed, the voltage generated and output by the on-board power generator when braking the vehicle, and provides the converted voltage to the electric load group, and charges the power storage apparatus with the converted voltage. The means for detecting detects the input voltage value V1 to the voltage conversion means, the voltage detection means and the electric current detection means detect the output voltage value V2 and the output electric current value I1 of the voltage conversion means, respectively, the other means for detecting detects the input/output electric current value I2 of the power storage apparatus, and charging to the second power storage apparatus that is charged with the voltage generated and output by the on-board power generator is controlled. The switch turns ON/OFF charging to the second power storage apparatus, and the means for calculating calculates the electric current value I3 required by the power storage apparatus and the electric load group, based on I1 and I2. The other means for calculating calculates the electric current value I4 to be output by the on-board power generator, based on V2, V1, and 13, and the determination means determines whether or not I4 so calculated is greater than the previously-provided maximum output electric current value of the on-board power generator. When the determination means determines that I4 is greater, the switch is turned OFF or PWM control is performed, so that charging to the second power storage apparatus is suppressed.

A charge control apparatus according to a sixteenth invention is a charge control apparatus including: a voltage conversion means for converting, as needed, a voltage generated and output by an on-board power generator, providing the converted voltage to an electric load group, and charging a power storage apparatus with the converted voltage, the on-board power generator generating electric power when braking the vehicle; a means for detecting an input voltage value V1 to the voltage conversion means; and a means for detecting an output voltage value V2 of the voltage conversion means, wherein the charge control apparatus controls charging to a second power storage apparatus that is charged with a voltage generated and output by the on-board power generator, the charge control apparatus including: a switch that turns ON/OFF charging to the second power storage apparatus; a means for receiving a usage state of the electric load group from an outside; a means for calculating an electric current value I3 required by the power storage apparatus and the electric load group, based on the usage state received by the means and a previously-provided power consumption of each of loads included in the electric load group; a means for calculating an electric current value I4 to be output by the on-board power generator, based on V2, V1, and I3; and a determination means for determining whether or not I4 calculated by the means is greater than a previously-provided maximum output electric current value of the on-board power generator, wherein the charge control apparatus is configured such that, when the determination means determines that I4 is greater than the maximum output electric current value, the switch is turned OFF or PWM control is performed.

In this charge control apparatus, the voltage conversion means converts, as needed, the voltage generated and output by the on-board power generator when braking the vehicle, and provides the converted voltage to the electric load group, and charges the power storage apparatus with the converted voltage. The means for detecting detects the input voltage value V1 to the voltage conversion means, the other means for detecting detects the output voltage value V2 of the voltage conversion means, and charging to a second power storage apparatus that is charged with a voltage generated and output by the on-board power generator is controlled. The switch turns ON/OFF charging to the second power storage apparatus, and the means for receiving receives the usage state of the electric load group from the outside. The means for calculating calculates the electric current value I3 required by the power storage apparatus and the electric load group, based on the received usage state and the previously-provided power consumption of each of the loads included in the electric load group, and the other means for calculating calculates the electric current value I4 to be output by the on-board power generator, based on V2, V1, and I3. The determination means determines whether or not I4 so calculated is greater than the previously-provided maximum output electric current value of the on-board power generator, and when the determination means determines that it is greater, the switch is turned OFF or PWM control is performed, so that charging to the second power storage apparatus is suppressed.

A charge control apparatus according to a seventeenth invention further includes a means for determining whether or not the on-board power generator is generating electric power when the determination means determines that I4 is greater, wherein the charge control apparatus is configured such that, when the means determines that the on-board power generator is not generating electric power, the on-board power generator is caused to generate electric power.

In this charge control apparatus, when the determination means determines that I4 is greater, whether or not the on-board power generator is generating electric power further determined, and when it is determined that the on-board power generator is not generating electric power, the on-board power generator is caused to generate electric power, and therefore the on-board power generator generates electric power even not in the case of regenerative braking.

A charge control apparatus according to an eighteenth invention further includes: a means for detecting an output voltage value V3 of the second power storage apparatus; and a means for determining whether or not V3 detected by the means is smaller than a predetermined voltage value, wherein the charge control apparatus is configured such that, when the means determines that V3 is lower, the switch is turned ON.

In this charge control apparatus, the means for detecting detects the output voltage value V3 of the second power storage apparatus, and the means for determining determines whether or not V3 so detected is lower than the predetermined voltage value. When the means for determining determines that V3 is lower, the switch is turned on in order to prevent the second power storage apparatus from being left in the state of overdischarge.

A charge control apparatus according to a nineteenth invention further includes a means for receiving a remaining capacity of the second power storage apparatus from an outside; and a means for determining whether or not the remaining capacity received by the means is lower than a predetermined capacity, wherein the charge control apparatus is configured such that, when the means determines that the remaining capacity is lower, the switch is turned ON.

In this charge control apparatus, the means for receiving receives the remaining capacity of the second power storage apparatus from the outside, and the means for determining determines whether the received remaining capacity is lower than the predetermined capacity. When the means for determining determines that the remaining capacity is lower, the switch is turned on in order to prevent the second power storage apparatus from being left in the state of overdischarge.

A power supply apparatus for vehicles according to a twentieth invention includes: an on-board power generator that generates electric power when braking the vehicle; a power storage apparatus; a second power storage apparatus; and a charge control apparatus according to any one of the fifteenth invention to the nineteenth invention.

Advantageous Effects of Invention

With the control apparatus according to the present invention, charging to the storage battery is appropriately switched from charging via the first charge channel to charging via the second charge channel, and therefore the storage battery can be quickly charged and a large amount of electric power can be stored in the storage battery.

The power supply control apparatus according to the present invention is capable of efficiently charging a first storage battery and a second storage battery each with a different charge voltage, and allows the electric power stored in each of the first storage battery and the second storage battery to be consumed efficiently.

The charge control method according to the present invention achieves a charge control method that is unlikely to cause a decrease in supply voltage to an electric load when charging a power storage apparatus with voltage generated by an on-board power generator that generates electric power when braking the vehicle.

The charge control apparatus according to the present invention achieves a charge control apparatus that is unlikely to cause a decrease in supply voltage to an electric load when charging a power storage apparatus with voltage generated by an on-board power generator that generates electric power when braking the vehicle.

The power supply apparatus for vehicles according to the present invention achieves a power supply apparatus for vehicles that includes a charge control apparatus that is unlikely to cause a decrease in supply voltage to an electric load when charging a power storage apparatus with voltage generated by an on-board power generator that generates electric power when braking the vehicle.

Brief Description of Drawings

FIG. 1 is a block diagram showing a configuration of a power supply apparatus in Embodiment 1 of a control apparatus according to the present invention.
FIG. 2 is a flowchart showing operational procedures performed by a control unit during reception of a charge signal.
FIG. 3 is a diagram illustrating advantageous effects of a control apparatus.
FIG. 4 is a block diagram showing a configuration of a power supply apparatus control apparatus in Embodiment 2 of a control apparatus according to the present invention.
FIG. 5 is a flowchart showing operational procedures performed by a control unit during reception of a charge signal.
FIG. 6 is a block diagram showing a configuration of Embodiment 3 of a power supply system according to the present invention.
FIG. 7 is a table illustrating control performed by a control unit when determining that regenerative electric power is being generated.
FIG. 8 is a block diagram illustrating control by a control unit.
FIG. 9 is another block diagram illustrating control by the control unit.
FIG. 10 is yet another block diagram illustrating control by the control unit.
FIG. 11 is a table illustrating control performed by the control unit when determining that regenerative electric power is not being generated.
FIG. 12 is a block diagram showing a configuration of a power supply system according to a modification example.
FIG. 13 is a block diagram showing a schematic configuration of Embodiment 4 of a charge control method, charge control apparatus, and power supply apparatus for vehicles according to the present invention.

FIG. 14 is a flowchart showing an example of operations of a charge control method, charge control apparatus, and power supply apparatus for vehicles according to the present invention.

FIG. 15 is a block diagram showing a schematic configuration of Embodiment 5 of a charge control apparatus and power supply apparatus for vehicles according to the present invention.

FIG. 16 is a flowchart showing an example of operations of a charge control apparatus and power supply apparatus for vehicles according to the present invention.

FIG. 17 is a block diagram showing an example of a schematic configuration of a conventional charge control apparatus.

Description of Embodiments

The following provides a detailed description of the present invention, based on the drawings showing embodiments thereof.

Embodiment 1

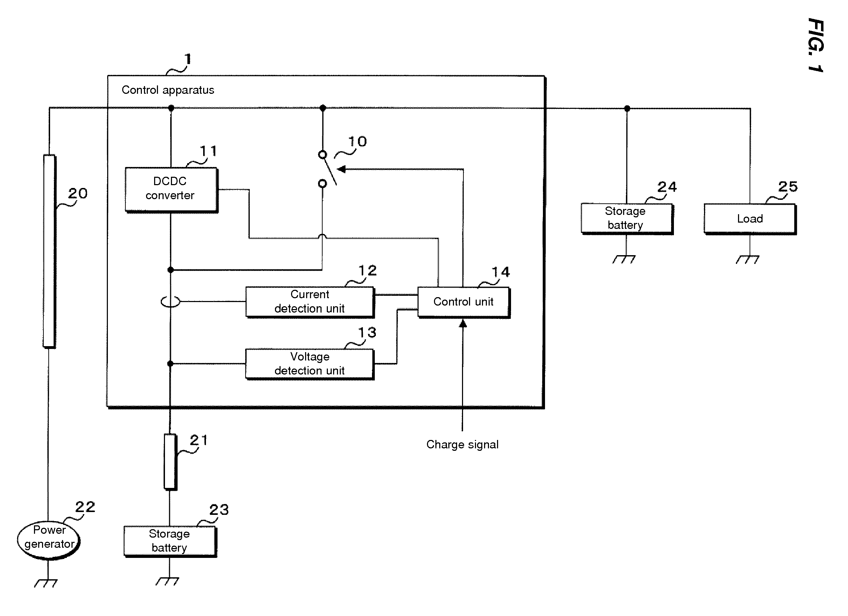

FIG. 1 is a block diagram showing a configuration of a power supply apparatus in Embodiment 1. This power supply apparatus is suitably mounted on a vehicle, and includes a control apparatus 1, electric wires 20 and 21, a power generator 22, storage batteries 23 and 24, and a load 25. The control apparatus 1 is connected between one end of the electric wire 20 and one end of the electric wire 21, the other end of the electric wire 20 is connected to one end of the power generator 22, and the other end of the electric wire 21 is connected to the positive terminal of the storage battery 23. The control apparatus 1 is connected to one end of the storage battery 24 and one end of the load 25, in addition to being connected to the electric wires 20 and 21. The other end of the power generator 22, the other end of the load 25, and the respective negative terminals of the storage batteries 23 and 24 are grounded.

The power generator 22 generates electric power by operating in conjunction with an engine, and also generates regenerative electric power by converting the kinetic energy of the vehicle into electric power when the vehicle reduces its speed. Specifically, the power generator 22 generates AC power, and rectifies the generated AC power to convert it to DC power. The electric power, voltage, and current generated by the power generator 22 are respectively the electric power, voltage, and current that have undergone the rectification.

Also, the value of the current generated by the power generator 22 is restricted to be no greater than a preset upper limit value.

The storage battery 23 is charged by being supplied with regenerative electric power from the power generator 22 via the control apparatus 1. Furthermore, the storage battery 23 supplies the electric power stored therein to the storage battery 24 and the load 25 via the control apparatus 1.

The storage battery 24 is a lead-acid battery for example, and stores therein electric power generated by the power generator 22 and supplies the electric power stored therein to the load 25.

The load 25 is an on-board device such as a light or a blower motor, and is supplied with the electric power generated by the power generator 22 or the electric power stored by the storage battery 24.

While the vehicle is reducing its speed and the power generator 22 is generating regenerative electric power, the control apparatus 1 receives, from the outside, a charge signal, which instructs to charge the storage battery 23. While receiving the charge signal, the control apparatus 1 charges the storage battery 23 by supplying the storage battery 23 with the electric power generated by the power generator 22.

While not receiving the charge signal, the control apparatus 1 supplies the storage battery 24 and the load 25 with the electric power generated by the power generator 22 and the electric power stored in the storage battery 23.

As described above, the control apparatus 1 controls charging from the power generator 22 to the storage battery 23.

The control apparatus 1 includes a switch 10, a DCDC converter 11, a current detection unit 12, a voltage detection unit 13, and a control unit 14.

One end of the switch 10 is connected to one end of the storage battery 24 and one end of the load 25, and is also connected to one end of the power generator 22 via the electric wire 20. The other end of the switch 10 is connected to the storage battery 23 via the electric wire 21.

The DCDC converter 11 has three terminals, among which a first terminal is connected to one end of the storage battery 24 and one end of the load 25, and is also connected to one end of the power generator 22 via the electric wire 20. A second terminal of the DCDC converter 11 is connected to the storage battery 23 via the electric wire 21. A third terminal of the DCDC converter 11 is connected to the control unit 14.

The control unit 14 is connected to each of the current detection unit 12 and the voltage detection unit 13 individually, in addition to being connected to the DCDC converter 11. The voltage detection unit 13 is also connected to one end of the electric wire 21 on the side of the DCDC converter 11.

The control apparatus 1, in which each component is connected as described above, has a first charge channel, through which the power generator 22 charges the storage battery 23 via the switch 10, and a second charge channel, through which the power generator 22 charges the storage battery 23 via the DCDC converter 11.

The switch 10 is made up from a FET (Field Effect Transistor), a bipolar transistor, or a relay contact for example, and is turned ON and OFF by the control unit 14.

The voltage generated by the power generator 22 is applied to the DCDC converter 11 via the electric wire 20, and the DCDC converter 11 steps up the voltage applied by the power generator 22, and applies the stepped-up voltage to the storage battery 23 via the electric wire 21. The DCDC converter 11 serves as a voltage step-up circuit.

Also, the output voltage from the storage battery 23 is applied to the DCDC converter 11 via the electric wire 21, and the DCDC converter 11 steps up or steps down the voltage applied by the storage battery 23, so as to convert the voltage, and applies the converted voltage to the storage battery 24 and the load 25.

Operations of the DCDC converter 11 are controlled by the control unit 14. Specifically, the control unit 14 causes the DCDC converter 11 to perform conversion of the voltage by repeatedly turning ON and OFF each of a plurality of switches, which are not shown in the drawings and are included in the DCDC converter 11 together with a coil not shown in the drawings. The control unit 14 is capable of adjusting the voltage step-up range and the voltage step-down range for the DCDC converter 11 by changing the ON/OFF duty cycle of one or more switches not shown in the drawings. Furthermore, the control unit 14 is also capable of stopping the operation of the DCDC converter 11 by turning ON and OFF each of a plurality of switches not shown in the drawings.

The current detection unit 12 detects the charge current flowing into the storage battery 23 via the electric wire 21, and notifies the control unit 14 of the detected charge current value.

The voltage detection unit 13 detects the applied voltage applied to one end of the electric wire 21 on the side of the DCDC converter 11, and notifies the control unit 14 of the detected applied voltage value.

The control unit 14 receives the charge signal from the outside. The control unit 14 controls ON/OFF of the switch 10 and the operations of the DCDC converter 11 based on whether or not it is receiving the charge signal, the charge current value detected by the current detection unit 12, and the applied voltage value detected by the voltage detection unit 13.

The control unit 14, while not receiving the charge signal, causes the DCDC converter 11 to convert the voltage output by the storage battery 23 via the electric wire 21, with the switch 10 being OFF. The DCDC converter 11 applies the converted voltage to the storage battery 24 and the load 25, as described above.

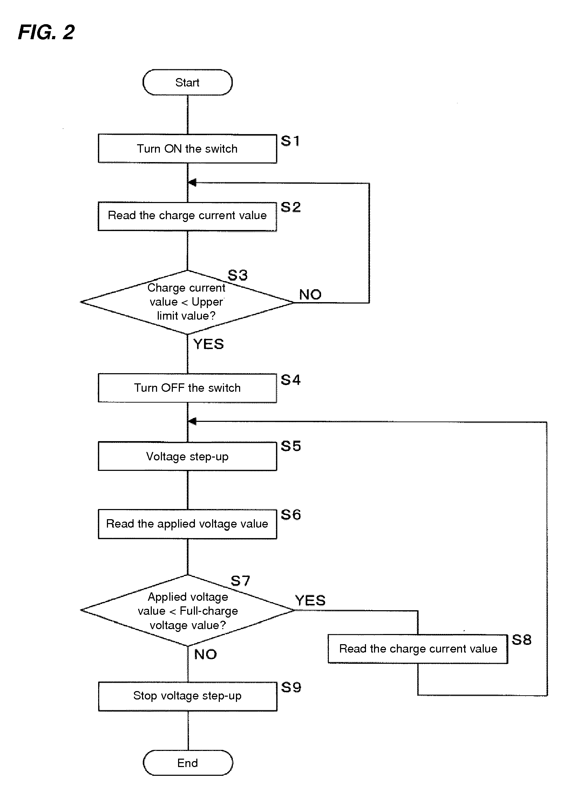

The control unit 14, while receiving the charge signal, controls charging from the power generator 22 to the storage battery 23. FIG. 2 is a flowchart showing operational procedures performed by the control unit 14 during reception of the charge signal.

The control unit 14, when receiving the charge signal and charging the storage battery 23, first turns on the switch 10, with the operation of the DCDC converter 11 being stopped (Step S1). As a result, the voltage generated by the power generator 22 is applied to the storage battery 23 via the switch 10, and the storage battery 23 is charged via the first charge channel. Here, when the storage battery 23 is sufficiently discharged and the electric power stored in the storage battery 23 is sufficiently small, current limiting is activated and the charge current having the upper limit value flows from the power generator 22 into the storage battery 23, because the voltage that can be generated by the power generator 22 is high and, furthermore, the resistance value of the electric wire 21 is sufficiently small.

For example, when the voltage that can be generated by the power generator 22 is 16 V, the output voltage of the storage battery 23 is 0 V, the resistance value of each of the electric wires 20 and 21 is 6 m$\Omega$, and the internal resistance value of the storage battery 23 is 4 m$\Omega$, the power generator 22 can feed a charge current of 1000 A (=16/0.016) to the storage battery 23. However, when the electric current value fed by the power generator 22 is limited to 100 A for example, the charge current value is 100 A. If this is the case, the power generator 22 generates a voltage of 1.6 V (=100$\times$0.016).

When the storage battery 23 is charged and the output voltage of the storage battery 23 becomes 4 V for example, the power generator 22 can feed a charge current of 750 A (=(16-4)/0.016) to the storage battery 23, however, the charge current value is limited to 100 A, and the power generator 22 generates 5.6V (=100$\times$0.16+4). In this way, the charge current value is limited to 100 A until the output voltage of the storage battery 23 exceeds 14.4 (=16-1.6) V. When the output voltage of the storage battery 23 exceeds 14.4 V, the limitation on the charge current is lifted, because the value of the charge current that flows when the power generator 22 generates a voltage of 16 V becomes lower than 100 A.

The control unit 14, after performing Step S1, reads the charge current value detected by the current detection unit 12 (Step S2), and determines whether the read charge current value is lower than the upper limit value of the charge current or not (Step S3). When determining that the charge current value is the upper limit value (Step S3: NO), the control unit 14 returns the processing to Step S2, and repeats the determination at Step S3 with the switch 10 being ON, until the charge current value becomes lower than the upper limit value. While the control unit 14 is repeating the determination at Steps S2 and S3, the charge current having the upper limit value flows into the storage battery 23 via the first charge channel on which the switch 10 is provided, and the output voltage of the storage battery 23 increases.

When determining that the charge current value is lower than the upper limit value (Step S3: YES), the control unit 14 turns OFF the switch 10 (Step S4). When turning OFF the switch 10 at Step S4, the control unit 14 causes the DCDC converter 11 to step up the voltage applied by the power generator 22 (Step S5). Here, the control unit 14 maintains the value of the charge current to the storage battery 23 at the upper limit value by increasing the voltage step-up range of the DCDC converter 11 along with an increase of the difference between the charge current value read at Step S2 and the upper limit value.

As described above, when the charge current value detected by the current detection unit 12 becomes lower than the upper limit value under the condition where the storage battery 23 is being charged via the first charge channel, the control unit 14 controls the switch 10 and the DCDC converter 11 so that charging of the storage battery 23 is switched to charging via the second charge channel on which the DCDC converter 11 is provided.

The control unit 14, after performing Step S5, reads the applied voltage value detected by the voltage detection unit 13 (Step S6), and determines whether or not the read applied voltage value is lower than a full-charge voltage value, which indicates that the storage battery 23 is fully charged (Step S7). Here, the full-charge voltage value is a value that is set based on the withstand voltage value of the storage battery 23. For example, as described above, when the upper limit value of the current generated by the power generator 22 is 100 A, the resistance value of the electric wire 21 and the internal resistance value of the storage battery 23 are 6 mΩ and 4 mΩ respectively, and when the withstand voltage value of the storage battery 23 is 15.8 V, the full-charge voltage value is 16.8 V (=15.8+100×0.010).

When determining that the applied voltage value is lower than the full-charge voltage value (Step S7: YES), the control unit 14 reads the charge current value detected by the current detection unit 12 (Step S8), and the processing returns to Step S5. At Step S5 performed after Step S8, the control unit 14 maintains the value of the charge current to the storage battery 23 at the upper limit value by increasing the voltage step-up range of the DCDC converter 11 along with an increase of the difference between the charge current value read at Step S8 and the upper limit value.

The control unit 14 repeats the processing from Step S5 to Step S8 until the applied voltage value detected by the voltage detection unit 13 becomes equal to the full-charge voltage value, and causes the DCDC converter 11 to perform voltage step-up, thereby maintaining the charge current value at the upper limit value. For example, when the upper limit value of the value of the current generated by the power generator 22 is 100 A, the resistance value of the electric wire 21 and the internal resistance value of the storage battery 23 are 6 mΩ and 4 mΩ respectively, and the output voltage of the storage battery 23 is 15 V, the control unit 14 causes the DCDC converter 11 to step up the voltage applied by the power generator 22 via the electric wire 20 to 16 V (=15+100×0.010). As a result, a charge current of 100 A flows into the storage battery 23 via the electric wire 21.

When determining that the applied voltage value is the full-charge voltage value (Step S7: NO), the control unit 14 causes the DCDC converter 11 to stop the voltage step-up (Step S9), and terminates the processing.

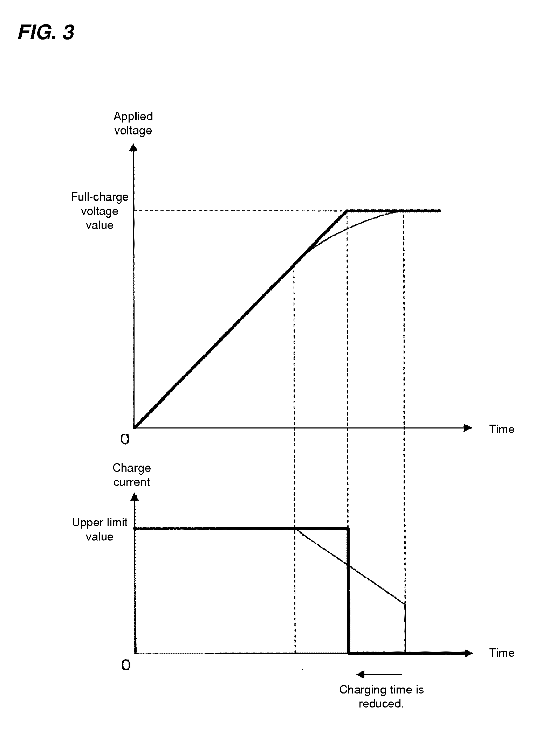

FIG. 3 is a diagram illustrating advantageous effects of the control apparatus 1. FIG. 3 shows the transitions of the applied voltage and the charge current in the case where the control unit 14 receives the charge signal and charges the storage battery 23, which has the output voltage of 0 V due to discharge. In FIG. 3, the respective transitions of the applied voltage and the charge current in a power supply apparatus having the control apparatus 1 are indicated by thick lines, and the respective transitions of the applied voltage and the charge current in a conventional power supply apparatus in which the power generator 22 and the storage battery 23 are connected by the electric wires 20 and 21 without the mediation of the control apparatus 1 are indicated by thin lines.

In FIG. 3, the portions that the respective transitions of the applied voltage and the charge current in the power supply apparatus having the control apparatus 1 and the respective transitions of the applied voltage and the charge current in the conventional power supply apparatus have in common are indicated by thick lines.

In the case of the conventional power supply apparatus, an electric current having the upper limit value flows from the power generator 22 into the storage battery 23 during the period in which the output voltage of the storage battery 23 is low, and the applied voltage applied to one end of the electric wire 21 on the side of the DCDC converter 11, i.e., the output voltage of the storage battery 23, increases. After current limiting for the power generator 22 is deactivated due to the increase in the output voltage of the storage battery 23, the charge current value decreases over time. As a result, the increase rate of the applied voltage continues to decrease until the applied voltage becomes the full-charge voltage.

In contrast, when the control apparatus 1 is used for charging the storage battery 23 from the power generator 22, an electric current having the upper limit value flows from the power generator 22 into the storage battery 23 during the period in which the output voltage of the storage battery 23 is low, in the same manner as in the conventional power supply apparatus. As a result, the applied voltage applied to one end of the electric wire 21 on the side of the DCDC converter 11, i.e., the output voltage of the storage battery 23, increases.

In the control apparatus 1, after current limiting for the power generator 22 is deactivated due to the increase in the output voltage of the storage battery 23, the charge current value is maintained at the upper limit value, by the DCDC converter 11 stepping up the voltage. For this reason, the increase rate of the applied voltage does not decrease until the applied voltage reaches the full-charge voltage value. Therefore, by using the control apparatus 1 for charging the storage battery 23 from the power generator 22, it is possible to reduce the time required for charging the storage battery 23, and quickly charge the storage battery 23.

The power generator 22 generates regenerative electric power while the vehicle is reducing its speed, and the period in which the vehicle is reducing its speed is short. Since it is possible to quickly charge the storage battery 23 by using the control apparatus 1, the use of the control apparatus 1 is particularly effective in the case of charging the storage battery 23 with regenerative electric power.

In addition, in the case of the control apparatus 1, the DCDC converter 11 steps up the voltage generated by the power generator 22, and accordingly electric power to be stored in the storage battery 23 is not limited by the voltage generated by the power generator 22. For example, even when the voltage generated by the power generator 22 is 16 V, a voltage equal to or greater than 16 V can be applied to the storage battery 23, owing to the voltage step-up by the DCDC converter 11. Therefore, it is possible to fully charge the storage battery 23 having a withstand voltage of 18 V, for example. For this reason, electric power to be stored in the storage battery 23 is not limited by the voltage generated by the power generator 22, and it is possible to store a large amount of electric power in the storage battery 23.

Note that the charge current maintained by the control unit 14 turning OFF the switch 10 and causing the DCDC converter 11 to step up the voltage is not limited to the upper limit value of the current generated by the power generator 22, and it may be an electric current value lower than the upper limit value. Even if this is the case, the charge current value is maintained to be equal to or greater than a certain value until the applied voltage value becomes the full-charge voltage value, and therefore it is possible to quickly charge the storage battery 23. Furthermore, since voltage step-up by the DCDC converter 11 is also performed, it is possible to store a large amount of electric power in the storage battery 23.

Embodiment 2

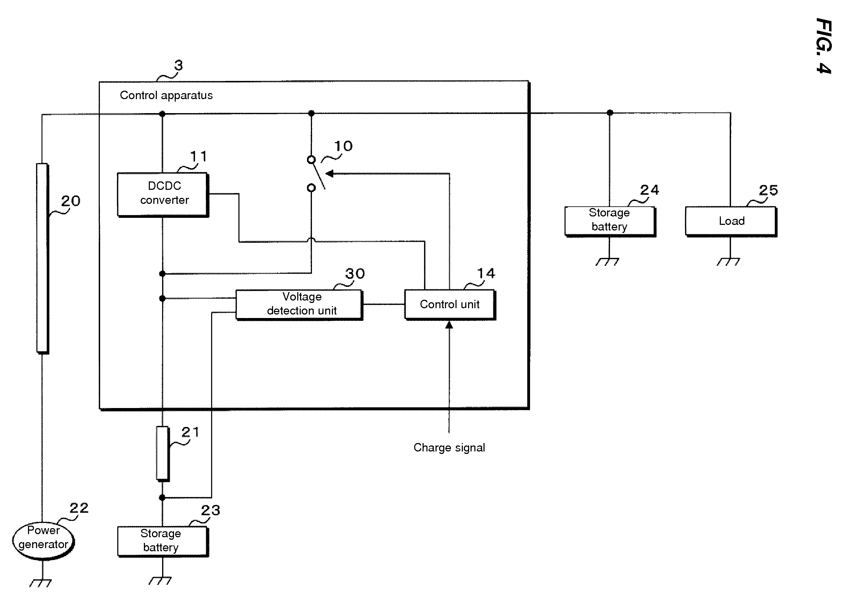

FIG. 4 is a block diagram showing a configuration of a power supply apparatus in Embodiment 2. This power supply apparatus includes a control apparatus 3 instead of the control apparatus 1 within the power supply apparatus in Embodiment 1. The power supply apparatus in Embodiment 1 is configured such that the charge current value to the storage battery 23 is maintained at the upper limit value. In contrast, the power supply apparatus in Embodiment 2 is configured such that the voltage across the two ends of the electric wire 21 is maintained at a constant value.

The following describes the power supply apparatus in Embodiment 2 in terms of the differences from the power supply apparatus in Embodiment 1. The components that Embodiment 2 has in common with Embodiment 1 are given the same reference signs, and the detailed description thereof is omitted.

The power supply apparatus in Embodiment 2 is suitably mounted on a vehicle as with the power supply apparatus in Embodiment 1, and includes the control apparatus 3, the electric wires 20 and 21, the power generator 22, the storage batteries 23 and 24, and the load 25. The control apparatus 3 is connected to one end of the electric wire 20 and one end and the other end of the electric wire 21, individually. The other end of the electric wire 20 is connected to one end of the power generator 22, and the other end of the electric wire 21 is also connected to the positive terminal of the storage battery 23. The control apparatus 3 is connected to one end of the storage battery 24 and one end of the load 25, in addition to being connected to the electric wires 20 and 21. The other end of the power generator 22, the other end of the load 25, and the respective negative terminals of the storage batteries 23 and 24 are grounded.

The control apparatus 3 receives a charge signal, which instructs to charge the storage battery 23. As with the control apparatus 1 in Embodiment 1, while receiving the charge signal, the control apparatus 3 charges the storage battery 23 by supplying the storage battery 23 with the electric power generated by the power generator 22, and while not receiving the charge signal, supplies the storage battery 24 and the load 25 with the electric power generated by the power generator 22 and the electric power stored in the storage battery 23.

As described above, the control apparatus 3 also controls charging from the power generator 22 to the storage battery 23.

As with the control apparatus 1, the control apparatus 3 includes the switch 10, the DCDC converter 11, and the control unit 14, which are connected in the same manner as in Embodiment 1. For this reason, as with the control apparatus 1, the control apparatus 3 also has a first charge channel, through which the power generator 22 charges the storage battery 23 via the switch 10, and a second charge channel, through which the power generator 22 charges the storage battery 23 via the DCDC converter 11. One end of the electric wire 21 is connected to the first charge channel and the second charge channel.

The control apparatus 3 further includes a voltage detection unit 30. The voltage detection unit 30 is connected to each of the two ends of the electric wire 21 individually, and is also connected to the control unit 14.

The voltage detection unit 30 detects the voltage at each of the two ends of the electric wire 21. Specifically, the voltage detection unit 30 detects the voltage at the one end of the electric wire 21 on the side of the DCDC converter 11, and the charge voltage applied to the storage battery 23. The voltage detection unit 30 notifies the control unit 14 of the detected two voltage values.

Each of the switch 10 and the DCDC converter 11 operates in the same manner as in Embodiment 1. For this reason, the DCDC converter 11 steps up the voltage generated by the power generator 22 and applied via the electric wire 20, and applies the stepped-up voltage to the storage battery 23 via the electric wire 21. The DCDC converter 11 serves as a voltage step-up circuit.

As in Embodiment 1, the control unit 14 in Embodiment 2 controls ON/OFF of the switch 10 and the operations of the DCDC converter 11. Also, the control unit 14 in Embodiment 2, while not receiving the charge signal, operates in the same manner as with the control unit 14 in Embodiment 1, and while receiving the charge signal, controls charging from the power generator 22 to the storage battery 23.

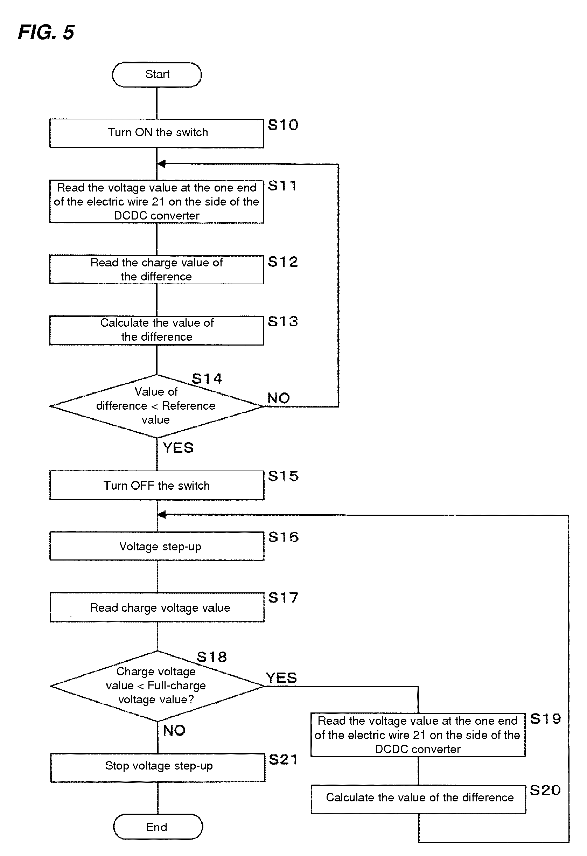

FIG. 5 is a flowchart showing operational procedures performed by the control unit 14 during reception of the charge signal. The control unit 14, when receiving the charge signal and charging the storage battery 23, first turns on the switch 10, with the operation of the DCDC converter 11 being stopped (Step S10). As a result, the voltage generated by the power generator 22 is applied to the storage battery 23 via the switch 10, and the storage battery 23 is charged via the first charge channel.

Here, as in Embodiment 1, the value of the current generated by the power generator 22 has the upper limit, and when the storage battery 23 is sufficiently discharged and the electric power stored in the storage battery 23 is sufficiently small, the charge current having the upper limit value flows from the power generator 22 into the storage battery 23, as described for Embodiment 1.

The control unit 14, after performing Step S10, reads the voltage value at the one end of the electric wire 21 on the side of the DCDC converter 11 from the voltage detection unit 30 (Step S11), and also reads the charge voltage value from the voltage detection unit 30 (Step S12). Subsequently, the control unit 14 calculates the value of the difference between the voltage value read at Step S11 and the charge voltage value read at Step S12, i.e., the value of the difference between the respective voltage values at the two ends of the electric wire 21 detected by the voltage detection unit 30 (Step S13). The voltage value of the difference between the voltage values detected by the voltage detection unit 30 corresponds to the calculation value calculated based on the voltage values detected by the voltage detection unit 30.

Subsequently, the control unit 14 determines whether or not the value of the difference calculated at Step S13 is less than the reference value that has been set in advance (Step S14). Here, the reference value is the value of the difference between the respective voltage values at the two ends of the electric wire 21 detected by the voltage detection unit 30 when an electric current having the upper limit value flows through the electric wire 21.

For example, when the upper limit value of the current generated by the power generator 22 is 100 A and the resistance value of the electric wire 21 is 6 mΩ, the reference value for the value of the difference between the respective voltage values at the two ends of the electric wire 21 is 0.6V (=100×0.006).

The control unit 14, when determining that the value of the difference is equal to the reference value (Step S14: NO), returns the processing to Step S11 and repeats the processing from Step S11 to Step S14 until the value of the difference between the respective voltage values at the two ends of the electric wire 21 becomes less than the reference value. Since the value of the difference of the electric wire 21 is at the reference value while the control unit 14 is repeating the processing from Step S11 to Step S14, a charge current having the upper limit value flows into the storage battery 23 via the first charge channel, and accordingly the storage battery 23 is charged and the output voltage of the storage battery 23 increases.

When the limitation on the charge current value is lifted and the charge current value decreases due to the increase of the output voltage of the storage battery 23, the value of the difference between the respective voltage values at the two ends of the electric wire 21 decreases. The following describes an example in which the voltage that the power generator 22 can generate is 16 V, the respective resistance values of the electric wires 20 and 21 are 6 mΩ, the internal resistance value of the storage battery is 4 mΩ, and the value of the current generated by the power generator 22 is limited to 100 A.

When the switch 10 is ON and the output voltage of the storage battery 23 is 0 V, the power generator 22 can generate an electric current of 1000 A (=16/0.016), but it is limited to 100 A. In this situation, the value of the difference between the respective voltage values at the two ends of the electric wire 21 is 0.6 V (=100×0.006).

In the case where the storage battery 23 is charged and the output voltage of the storage battery 23 exceeds 14.4 V, the value of the charge current that flows when the power generator 22 generates a voltage of 16 V becomes lower than 100 A, and accordingly the limitation on the charge current is lifted. For example, in the case where the output voltage of the storage battery 23 is 14.72 V, the value of the charge current that flows when the power generator 22 generates a voltage of 16 V is 80 A (=(16-14.72)/0.016). In this case, the value of the difference between the respective voltage values at the two ends of the electric wire 21 is 0.48 V, which is lower than the reference value, i.e., 0.6 V.

The control unit 14, when determining that the value of the difference is less than the reference value (Step S14: YES), turns OFF the switch 10 (Step S15). When turning OFF the switch 10 at Step S15, the control unit 14 causes the DCDC converter 11 to step up the voltage applied by the power generator 22 (Step S16). Here, the control unit 14 maintains the value of the difference between the two ends of the electric wire 21 at the reference value by increasing the voltage step-up range of the DCDC converter 11 along with an increase of the difference between the value of the difference calculated at Step S13 and the reference value.

As described above, when the value of the difference between the voltage values detected by the voltage detection unit 30 becomes lower than the reference value under the condition where the storage battery 23 is being charged via the first charge channel, the control unit 14 controls the switch 10 and the DCDC converter 11 so that charging of the storage battery 23 is switched to charging via the second charge channel on which the DCDC converter 11 is provided.

The control unit 14, after performing Step S16, reads the charge voltage value detected by the voltage detection unit 13 (Step S17), and determines whether or not the read charge voltage value is lower than the full-charge voltage value, which indicates that the storage battery 23 is fully charged (Step S18). Here, the full-charge voltage value is a value that is set based on the withstand voltage value of the storage battery 23. For example, as described above, when the upper limit value of the current generated by the power generator 22 is 100 A, the internal resistance value of the storage battery 23 is 4 mΩ, and when the withstand voltage value of the storage battery 23 is 15.8 V, the full-charge voltage value is 16.2 V (=15.8+100×0.004).

When determining that the charge voltage value is lower than the full-charge voltage value (Step S18: YES), the control unit 14 reads, from the voltage detection unit 30, the voltage value at the one end of the electric wire 21 on the side of the DCDC converter 11 (Step S19). Subsequently, the control unit 14 calculates the value of the difference between the charge voltage value read at Step S17 and the voltage value read at Step S19, i.e., the value of the difference between the respective voltage values at the two ends of the electric wire 21 detected by the voltage detection unit 30 (Step S20). After performing Step S20, control unit 14 returns the processing to Step S16.

At Step S16 performed after Step S20, the control unit 14 maintains the value of the difference between the respective voltage values of the two ends of the electric wire 21 by increasing the voltage step-up range of the DCDC converter 11 along with an increase of the difference between the value of the difference calculated at Step S20 and the reference value.

The control unit 14 repeats the processing from Step S16 to Step S20 until the charge voltage value detected by the voltage detection unit 13 becomes equal to the full-charge voltage value, and causes the DCDC converter 11 to perform voltage step-up, thereby maintaining the value of the difference between the respective voltage values at the two ends of the electric wire 21 at the reference value. For example, when the upper limit value of the value of the current generated by the power generator 22 is 100 A, the resistance value of the electric wire 21 is 6 mΩ, and the charge voltage value is 15.4 V, the control unit 14 causes the DCDC converter 11 to step up the voltage applied by the power generator 22 via the electric wire 20 to 16 V (=15.4+100×0.006).

When determining that the charge voltage value is the full-charge voltage value (Step S18: NO), the control unit 14 causes the DCDC converter 11 to stop the voltage step-up (Step S21), and terminates the processing.

In the control apparatus 1 configured as described above, after current limiting for the power generator 22 is deactivated due to the increase in the output voltage of the storage battery 23, the value of the difference between the respective voltage values at the two ends of the electric wire 21 is maintained at the reference value by the DCDC converter 11 stepping up the voltage. As a result, the value of the charge current flowing into the storage battery 23 via the electric wire 21 is maintained at the upper limit value, and the amount of electric power stored in the storage battery 23 per unit time does not decrease until the charge voltage value reaches the full-charge voltage value. Therefore, the time required for charging the storage battery 23 is short, and the storage battery 23 can be quickly charged.

The power generator 22 generates regenerative electric power while the vehicle is reducing its speed, and the period in which the vehicle is reducing its speed is short. For this reason, the use of the control apparatus 3 is particularly effective in the case of charging the storage battery 23 with regenerative electric power, as with the use of the control apparatus 1 in Embodiment 1.

Also, in the control apparatus 3, as in the control apparatus 1 in Embodiment 1, the DCDC converter 11 steps up the voltage generated by the power generator 22, and accordingly electric power to be stored in the storage battery 23 is not limited by the voltage generated by the power generator 22. For this reason, electric power to be stored in the storage battery 23 is not limited by the voltage generated by the power generator 22, and it is possible to store a large amount of electric power in the storage battery 23.

Note that the reference value is not limited to the value of the difference between the respective voltage values at the two ends of the electric wire 21 detected by the voltage detection unit 30 when an electric current having the upper limit value generated by the power generator 22 flows through the electric wire 21, and it may be a difference value that is lower than the value of the difference. Even if this is the case, the value of the difference between the respective voltage values at the two ends of the electric wire 21 is maintained to be equal to or greater than a certain value and also the charge current value is maintained to be equal to or greater than a certain value until the charge voltage value becomes the full-charge voltage value, and therefore it is possible to quickly charge the storage battery 23. Furthermore, since voltage step-up is also performed by the DCDC converter 11, it is possible to store a large amount of electric power in the storage battery 23. Instead of the value of the difference, another calculation value calculated based on voltage values detected by the voltage detection unit 13 may be used.

In addition, the control apparatus 3 may be configured to have the electric wire 21 therein.

Embodiment 3

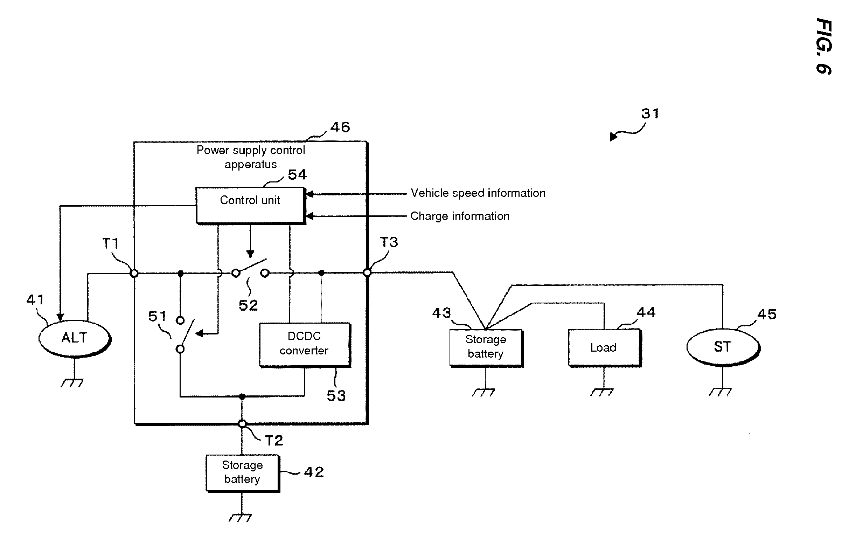

FIG. 6 is a block diagram showing a configuration of Embodiment 3 of a power supply system according to the present invention. This power supply system 31 is suitably mounted on a vehicle, and includes an alternator 41, storage batteries 42 and 43, a load 44, a starter 45, and a power supply control apparatus 46. The power supply control apparatus 46 has terminals T1, T2, and T3.

To the terminals T1, T2, and T3 of the power supply control apparatus 46, the positive terminal of the alternator 41, the positive terminal of the storage battery 42, and the positive terminal of the storage battery 43 are detachably connected, respectively. Furthermore, to the positive terminal of the storage battery 43, one end of the load 44 and one end of the starter 45 are connected. The respective negative terminals of the alternator 41 and the storage batteries 42 and 43, the other end of the load 44, and the other end of the starter 45 are grounded.

The alternator 41 generates regenerative electric power by converting the kinetic energy of the vehicle into electric power when the vehicle reduces its speed. Also, when receiving an activation instruction to operate from the power supply control apparatus 46, the alternator 41 generates electric power by operating in conjunction with an engine, which is not shown in the drawings. Furthermore, when receiving a voltage instruction indicating the output voltage of the alternator 41 from the power supply control apparatus 46, the alternator 41 outputs the output voltage indicated by the received voltage instruction.

When generating regenerative electric power, or when generating electric power in conjunction with an engine, the alternator 41 generates AC power, and rectifies the generated AC power to convert it to DC power. The regenerative electric power generated by the alternator 41 and the electric power generated by the alternator 41 in conjunction with an engine are DC power. The alternator 41 serves as a power generator.

The storage battery 42 is a lithium battery, an electric double-layer capacitor, or the like, and is supplied with electric power generated by the alternator 41, via the power supply control apparatus 46, and stores therein the supplied electric power. The storage battery 42 supplies the stored electric power to the load 44 via the power supply control apparatus 46. The storage battery 42 serves as a first storage battery.

The storage battery 43 is a lead-acid battery for example, and, as with the storage battery 42, is supplied with the electric power generated by the alternator 41 via the power supply control apparatus 46, and stores therein the supplied electric power. The storage battery 43 supplies the electric power stored therein to the load 44 and the starter 45. The storage battery 43 serves as a second storage battery.

The load 44 is an electric device such as a light or a wiper, and is supplied with electric power by the alternator 41 or the storage battery 42 via the power supply control apparatus 46, or is supplied with electric power directly from the storage battery 43. The load 44 operates by using the supplied electric power.

The starter 45 is a motor for starting up an engine, and performs starting up by using the electric power supplied by the storage battery 42.

The power supply control apparatus 46 receives, from the outside, vehicle speed information indicating the speed of the vehicle, and charge information indicating the SOC (State Of Charge) of each of the storage batteries 42 and 43. The SOC is a numerical value expressed in percentage for example, and the respective SOCs of the storage batteries 42 and 43 indicate the respective remaining capacities of the storage batteries 42 and 43. The charge information corresponds to the first and second remaining capacity information.

The power supply control apparatus 46 controls the power supply from the alternator 41 to the storage batteries 42 and 43 and the load 44, and the power supply from the alternator 41 to the storage battery 42, according to the speed indicated by the vehicle speed information received from the outside, and the respective SOCs of the storage batteries 42 and 43 indicated by the charge information received from the outside. Also, the power supply control apparatus 46 transforms the output voltage of the alternator 41 applied to the terminal T1, or the output voltage of the storage battery 42 applied to the terminal T2, according to the speed and the SOCs respectively indicated by the vehicle speed information and the charge information received from the outside, and applies the transformed voltage to the load 44 from the terminal T3. Furthermore, the power supply control apparatus 46 outputs the activation instruction and drives the alternator 41 when the speed and the SOCs respectively indicated by the vehicle speed information and the charge information received from the outside satisfy the predetermined conditions described below.

The power supply control apparatus 46 includes switches 51 and 52, a DCDC converter 53, and a control unit 54.

One end of the switch 51 and one end of the switch 52 are connected to the terminal T1. The other end of the switch 51 is connected to the terminal T2, and the other end of the switch 52 is connected to the terminal T3. The DCDC converter 53 is connected between the terminals T2 and T3, and is also connected to the control unit 54.

In the power supply control apparatus 46 in which each of the switches 51 and 52 and the DCDC converter 53 are connected as described above, the switch 51 is provided on the power supply channel from the alternator 41 to the storage battery 42, and the switch 52 is provided on the power supply channel from the alternator 41 to the storage battery 43 and the load 44. Also, the DCDC converter 53 is provided between the connection node between the storage battery 42 and the switch 51, and the load 44.

The switches 51 and 52 respectively serve as first and second switches.

Each of the switches 51 and 52 is a semiconductor switch such as a FET (Field Effect Transistor) or a bipolar transistor, or a relay contact for example, and is turned ON and OFF by the control unit 54.

The DCDC converter 53 includes, for example, a plurality of switches and a coil, which are not shown in the drawings. The DCDC converter 53 is caused to operate by the control unit 54 repeatedly turning ON and OFF each of the plurality of switches individually, and steps up or steps down the output voltage of the alternator 41 or the storage battery 43, thereby transforming the output voltage. The DCDC converter 53 applies the transformed voltage to the load 44 via the terminal T3.

The DCDC converter 53 serves as a voltage transformer circuit.

Also, the voltage transformation by the DCDC converter 53 can be stopped by the control unit 54 maintaining the ON/OFF state of each of the plurality of switches to be in a predetermined state, e.g., in the state where all of the plurality of switches are OFF. When the DCDC converter 53 is stopped, the path between the terminals T2 and the T3 is open.

The control unit 54 receives the vehicle speed information and the charge information from the outside at predetermined intervals. The control unit 54 acquires the vehicle speed information from, for example, an ECU (Electronic Control Unit) that controls the engine, and acquires the charge information from, for example, an ECU that monitors the charging state of the storage batteries 42 and 43.

The control unit 54 serves as an acquisition means.

The control unit 54 determines whether or not the vehicle is reducing its speed, based on the speed indicated by the vehicle speed information acquired from the outside. Specifically, the control unit 54 determines that the vehicle is reducing its speed when the speed indicated by the vehicle speed information is decreasing over time, and determines that the vehicle is not reducing its speed when the speed indicated by the vehicle speed information is constant or increasing over time.

The control unit 54 determines whether or not the alternator 41 is generating regenerative electric power, based on the result of the determination as to whether or not the vehicle is reducing its speed. When determining that the vehicle is reducing its speed, the control unit 54 determines that the alternator 41 is generating regenerative electric power, and when determining that the vehicle is not reducing its speed, the control unit 54 determines that the alternator 41 is not generating regenerative electric power.

The control unit 54 also serves as a determination means.

The control unit 54 controls ON/OFF of each of the switches 51 and 52, and the activation/deactivation of the DCDC converter 53, based on the respective SOCs of the storage batteries 42 and 43 indicated by the charge information acquired from the outside and the result of the determination as to whether or not the alternator 41 is generating regenerative electric power.

The control unit 54 also serves as a control means.

As described above, the control unit 54 activates the DCDC converter 53 by repeatedly turning ON and OFF each of the plurality of switches that the DCDC converter 53 has, and deactivates the DCDC converter 53 by maintaining the plurality of switches that the DCDC converter 53 has, in a predetermined state.

Furthermore, the control unit 54 drives the alternator 41 by outputting the activation instruction to the alternator 41, and controls the output voltage of the alternator 41 by outputting the voltage instruction to the alternator 41.

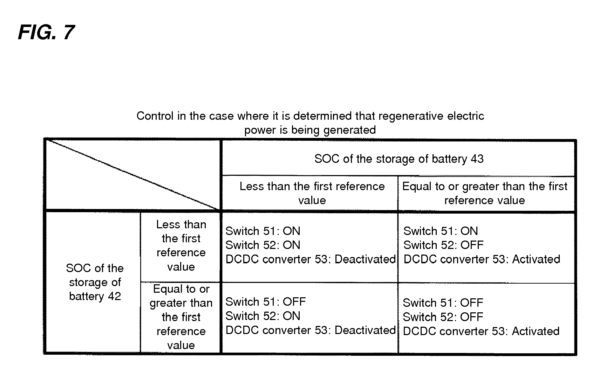

FIG. 7 is a table illustrating control performed by the control unit 54 when determining that regenerative electric power is being generated. FIG. 7 shows ON/OFF of each of the switches 51 and 52 controlled by the control unit 54, and the activation/deactivation of the DCDC converter 53, in correspondence with whether or not the SOC of the storage battery 42 is equal to or greater than a first reference value, and whether or not the SOC of the storage battery 43 is equal to or greater than a second reference value.

In the case where the control unit 54 determines that the alternator 41 is generating regenerative electric power, when the SOC of the storage battery 42 indicated by the charge information is less than the first reference value and the SOC of the storage battery 43 indicated by the charge information is less than the second reference value, the control unit 54 turns ON both of the switches 51 and 52, and deactivates the DCDC converter 53.

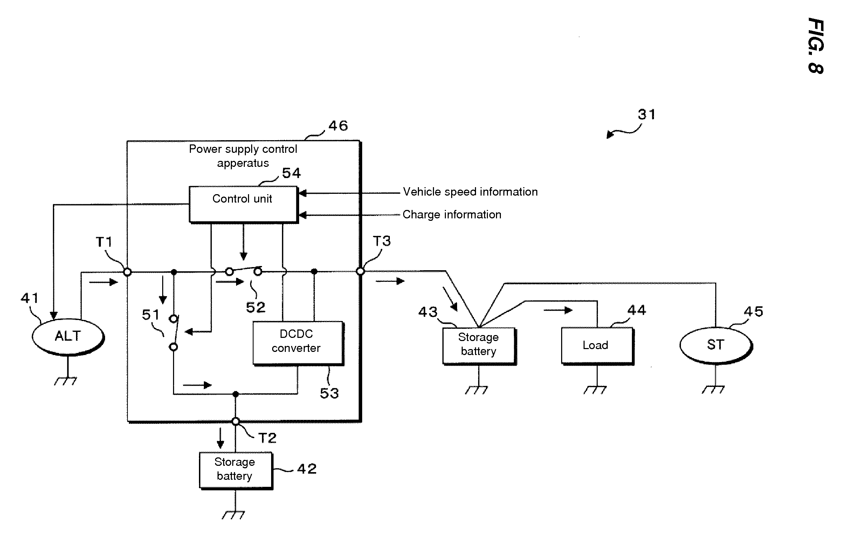

FIG. 8 is a block diagram illustrating control by the control unit 54. In the case where the alternator 41 is generating regenerative electric power, when both of the switches 51 and 52 are ON and the DCDC converter 53 is deactivated, the regenerative electric power generated by the alternator 41 is supplied to the storage battery 42 via the switch 51, and is supplied to the storage battery 43 and the load 44 via the switch 52, as indicated by the arrows shown in FIG. 8. By outputting a voltage instruction, the control unit 54 regulates the output voltage of the alternator 41 to be a first voltage having a constant value, and the first voltage is applied to the respective positive terminals of the storage batteries 42 and 43 and one end of the load 44.

The regenerative electric power generated by the alternator 41 is supplied to, via the switch 51, the storage battery 42 whose SOC is less than the first reference value and whose remaining capacity is small. Similarly, the regenerative electric power generated by the alternator 41 is also supplied to, via the switch 52, the storage battery 43 whose SOC is less than the second reference value and whose remaining capacity is small. Thus, each of the storage batteries 42 and 43 is charged.

In the case where the control unit 54 determines that the alternator 41 is generating regenerative electric power, when the SOC of the storage battery 42 indicated by the charge information is less than the first reference value and the SOC of the storage battery 43 indicated by the charge information is equal to or greater than the second reference value, the control unit 54 turns ON the switch 51, turns OFF the switch 52, and activates the DCDC converter 53 as shown in FIG. 7.

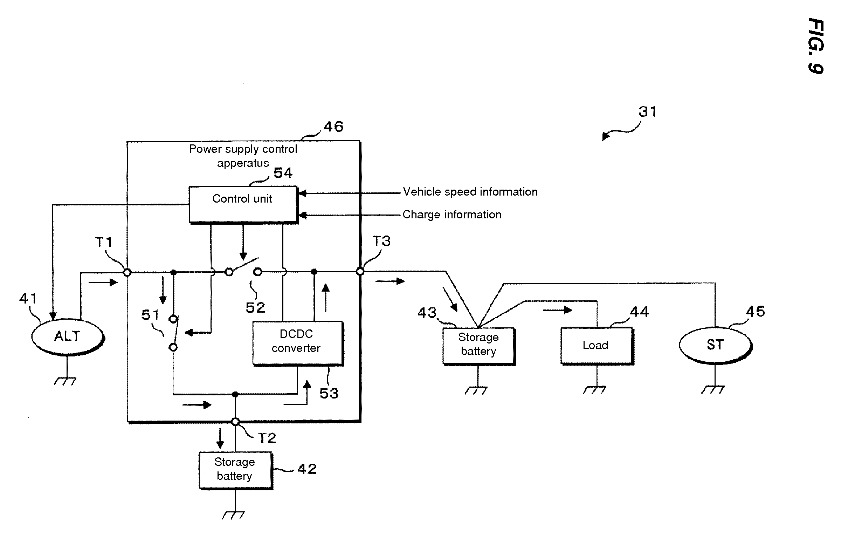

FIG. 9 is another block diagram illustrating control by the control unit 54. In the case where the alternator 41 is generating regenerative electric power, when the switches 51 and 52 are ON and OFF respectively and the DCDC converter 53 is activated, the regenerative electric power generated by the alternator 41 is supplied to the storage battery 42 via the switch 51 as indicated by the arrows shown in FIG. 9, and the storage battery 42 having a small amount of remaining capacity is charged. In such a situation, by outputting a voltage instruction, the control unit 54 regulates the output voltage of the alternator 41 to be a second voltage having a constant value, and the second voltage is applied to the positive terminal of the storage battery 42.

The DCDC converter 53 transforms the output voltage of the alternator 41, namely the second voltage, and applies the transformed voltage to the load 44. Thus, the load 44 is supplied with electric power. Here, the control unit 54 adjusts the voltage step-up range or the voltage step-down range for the DCDC converter 53 by adjusting the duty cycle of each of the plurality of switches that are repeatedly turned ON and OFF in the DCDC converter 53. The control unit 54 supplies electric power to the load 44 without supplying electric power to the storage battery 43 by, for example, substantially equalizing the voltage transformed by the DCDC converter 53 with the output voltage of the storage battery 43. As a result, the storage battery 43 is maintained in the state of having a large amount of remaining capacity.

In the power supply control apparatus 46, since the DCDC converter 53 is provided between the terminals T2 and T3 and each of the storage batteries 42 and 43 can be charged individually, the second voltage can be set to a voltage that is higher than the first voltage. Therefore, the storage batteries 42 and 43 can be charged with different charge voltages. More specifically, the storage battery 43 can be charged with the first voltage, and the storage battery 42 can be charged with the second voltage, which is higher than the first voltage. For this reason, it is possible to, for example, charge the storage battery 42 until the open voltage becomes 48 V, and charge the storage battery 43 until the open voltage becomes 12 V.

Thus, since the power supply system 31 is provided with the power supply control apparatus 46, each of the storage batteries 42 and 43 can be charged individually, and accordingly the charge amount of each of the storage batteries 42 and 43 is not limited by the charge amount of the other storage battery. For this reason, in the power supply system 31, a load whose operating voltage is different from that of the load 44 can be driven in addition to the load 44. For example, when the output voltage of the storage battery 42 and the output voltage of the storage battery 43 are respectively 48 V and 12 V, a load that operates with 48 V can be provided in the power supply system 31 in addition to the load 44 that operates with 12 V. If this is the case, with respect to the load that operates with 48 V, one end is connected to the positive terminal of the storage battery 42, and the other end is grounded. As a result, this load can be driven in the cases other than the case where both of the switches 51 and 52 are ON.

Also, since the power supply system 31 is provided with the power supply control apparatus 46 and each of the storage batteries 42 and 43 can be charged with a different charge voltage individually, a torque assist function can be provided, by which an output voltage that is higher than the operating voltage of the load 44 is applied from the storage battery 42 to the alternator 41 so that the engine is assisted to drive.

In the case where the control unit 54 determines that the alternator 41 is generating regenerative electric power, when the SOC of the storage battery 42 indicated by the charge information is equal to or greater than the first reference value and the SOC of the storage battery 43 indicated by the charge information is less than the second reference value, the control unit 54 turns OFF the switch 51 and turns ON the switch 52, and deactivates the DCDC converter 53, as shown in Fig. 7.

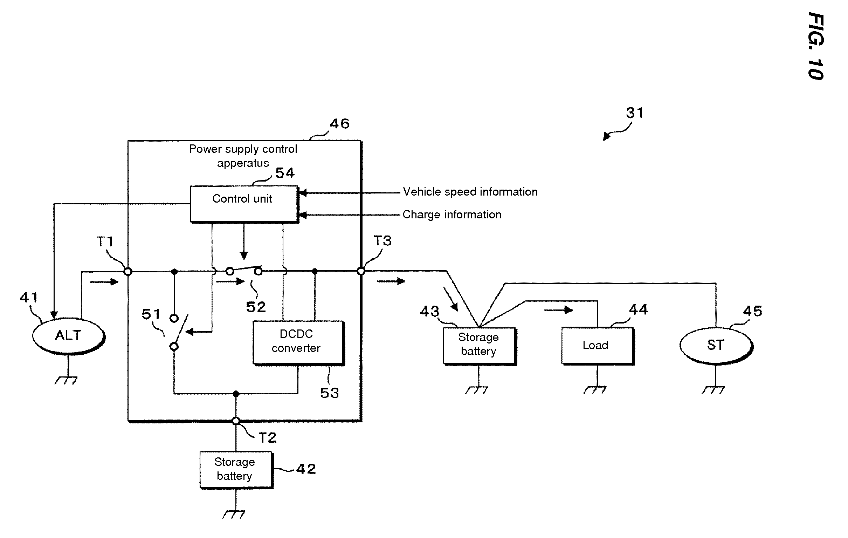

FIG. 10 is yet another block diagram illustrating the control by the control unit 54. In the case where the alternator 41 is generating regenerative electric power, when the switches 51 and 52 are respectively OFF and ON and the DCDC converter 53 is deactivated, the regenerative electric power generated by the alternator 41 is supplied to the storage battery 43 and the load 44 via the switch 52 as indicated by the arrows shown in FIG. 10, and the storage battery 43 having a small amount of remaining capacity is charged. In such a situation, by outputting a voltage instruction, the control unit 54 regulates the output voltage of the alternator 41 to be the first voltage, and the first voltage is applied to the positive terminal of the storage battery 43. Also, since the switch 51 is OFF and the DCDC converter 53 is deactivated, no current flows between the storage batteries 42 and 43, and the storage battery 42 is maintained in the state of having a large remaining capacity.

In the case where the control unit 54 determines that the alternator 41 is generating regenerative electric power, when the SOC of the storage battery 42 indicated by the charge information is equal to or greater than the first reference value and the SOC of the storage battery 43 indicated by the charge information is equal to or greater than the second reference value, the control unit 54 turns OFF both of the switches 51 and 52 and activates the DCDC converter 53 as shown in FIG. 7.

In the case where the alternator 41 is generating regenerative electric power, when both of the switches 51 and 52 are OFF as shown in FIG. 6 and the DCDC converter 53 is activated, the DCDC converter 53 transforms the output voltage of the storage battery 42 and applies the transformed voltage to the load 44. Thus, the load 44 is supplied with electric power. Here, the control unit 54 supplies electric power to the load 44 without charging the storage battery 43 by, for example, substantially equalizing the voltage transformed by the DCDC converter 53 with the output voltage of the storage battery 43. The regenerative electric power generated by the alternator 41 is not supplied to the storage batteries 42 and 43 having a large remaining capacity, or to the load 44.

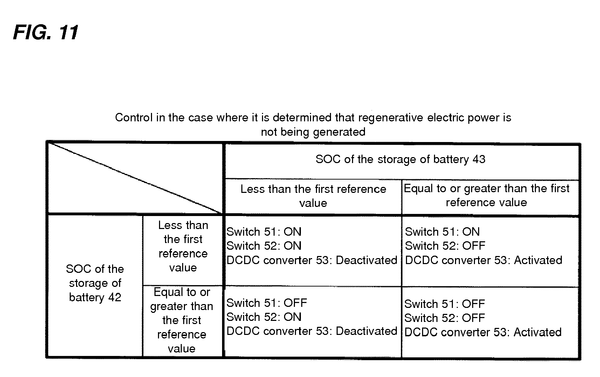

FIG. 11 is a table illustrating the control performed by the control unit 54 when determining that regenerative electric power is not being generated. As with FIG. 7, FIG. 11 shows ON/OFF of each of the switches 51 and 52 controlled by the control unit 54, and the activation/deactivation of the DCDC converter 53, in correspondence with whether or not the SOC of the storage battery 42 is equal to or greater than the first reference value, and whether or not the SOC of the storage battery 43 is equal to or greater than the second reference value.

In the case where the control unit 54 determines that the alternator 41 is not generating regenerative electric power, when the SOC of the storage battery 42 indicated by the charge information is less than the first reference value and the SOC of the storage battery 43 indicated by the charge information is less than the second reference value, the control unit 54 turns ON both of the switches 51 and 52, and deactivates the DCDC converter 53. In this situation, the control unit 54 also outputs an activation instruction to drive the alternator 41, and the alternator 41 generates electric power in conjunction with the engine.

The control unit 54 also serves as a driving means.

In the case where the alternator 41 is not generating regenerative electric power, when both of the switches 51 and 52 are ON, the DCDC converter 53 is deactivated, and the alternator 41 is generating electric power in conjunction with the engine, the electric power generated by the alternator 41 is supplied to the storage battery 42 via the switch 51, and is supplied to the storage battery 43 and the load 44 via the switch 52, as shown in FIG. 8. By outputting a voltage instruction, the control unit 54 regulates the output voltage of the alternator 41 to be the first voltage, and the first voltage is applied to the respective positive terminals of the storage batteries 42 and 43 and one end of the load 44.

The electric power generated by the alternator 41 in conjunction with the engine is supplied to, via the switch 51, the storage battery 42 whose SOC is less than the first reference value and whose remaining capacity is small. Similarly, the electric power generated by the alternator 41 in conjunction with the engine is supplied to, via the switch 52, the storage battery 43 whose SOC is less than the second reference value and whose remaining capacity is small. Thus, each of the storage batteries 42 and 43 is charged.

In the case where the control unit 54 determines that the alternator 41 is not generating regenerative electric power, when the SOC of the storage battery 42 indicated by the charge information is less than the first reference value and the SOC of the storage battery 43 indicated by the charge information is equal to or greater than the second reference value, the control unit 54 turns OFF both of the switches 51 and 52 and deactivates the DCDC converter 53 as shown in FIG. 11.

In the case where the alternator 41 is not generating regenerative electric power, when both of the switches 51 and 52 are OFF as shown in FIG. 6 and the DCDC converter 53 is deactivated, electric power is supplied from the storage battery 43, which has a large remaining capacity, to the load 44. Since the storage battery 42, which has a small remaining capacity, does not supply electric power, the remaining capacity of the storage battery 42 is maintained.

In the case where the control unit 54 determines that the alternator 41 is not generating regenerative electric power, when the SOC of the storage battery 42 indicated by the charge information is equal to or greater than the first reference value, the control unit 54 turns OFF both of the switches 51 and 52 and activates the DCDC converter 53 as shown in FIG. 11, regardless of whether or not the SOC of the storage battery 43 indicated by the charge information is equal to or greater than the second reference value.

In the case where the alternator 41 is not generating regenerative electric power, when both of the switches 51 and 52 are OFF as shown in FIG. 6 and the DCDC converter 53 is activated, the DCDC converter 53 transforms the output voltage of the storage battery 42 having a large remaining capacity, and applies the transformed voltage to the load 44. Thus, the load 44 is supplied with electric power. Here, the control unit 54 supplies electric power to the load 44 without charging the storage battery 43 by, for example, substantially equalizing the voltage transformed by the DCDC converter 53 with the output voltage of the storage battery 43. Since the storage battery 43 does not supply electric power, the remaining capacity of the storage battery 43 is maintained.

As described above, in the power supply control apparatus 46, the control unit 54 controls ON/OFF of each of the switches 51 and 52 and the activation/deactivation of the DCDC converter 53, based on the respective SOCs of the storage batteries 42 and 43 indicated by the charge information and the result of the determination as to whether or not the alternator 41 is generating regenerative electric power. For this reason, each of the storage batteries 42 and 43 can be efficiently charged with a different charge voltage, and the electric power stored by each of the storage batteries 42 and 43 can be efficiently consumed.

Also, as described above, the terminals T1, T2, and T3 are detachably connected to the positive terminal of the alternator 41, the positive terminal of the storage battery 42, and the positive terminal of the storage battery 43, respectively, and therefore the power supply control apparatus 46 can be removed from the power supply system 31. After removing the power supply control apparatus 46, by connecting the respective positive terminals of the alternator 41 and the storage battery 43 and causing the alternator 41 to generate electric power always in conjunction with the engine, it is easy to modify the power supply system 31 to be a conventional vehicle power supply system for vehicles, in which no regenerative electric power is generated. Also, by attaching the power supply control apparatus 46 to a conventional power supply system in which no regenerative electric power is generated, it is easy to modify the conventional power supply system to be the power supply system 31.

(Modification Example)

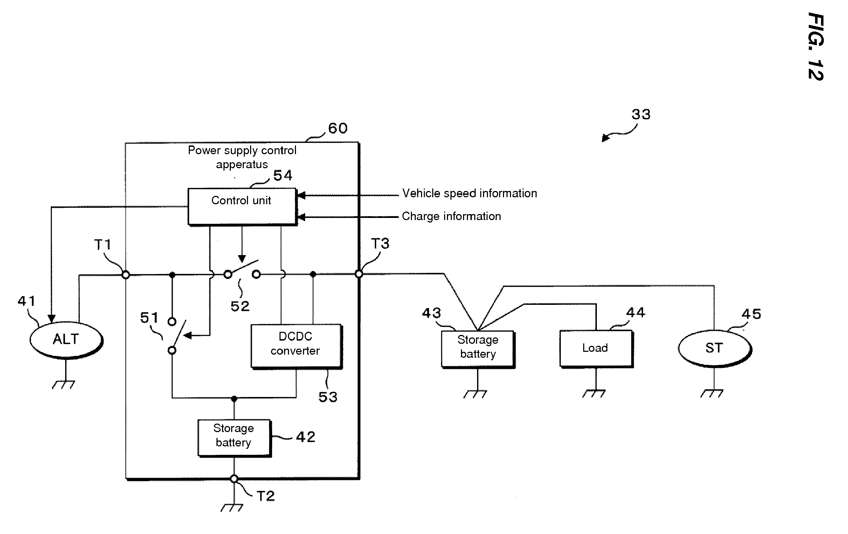

FIG. 12 is a block diagram showing a configuration of a power supply system according to a modification example. This power supply system 33 is suitably mounted on a vehicle, and, as with the power supply system 31, includes the alternator 41, the storage battery 43, the load 44, and the starter 45. The power supply system 33 according to the modification example further includes a power supply control apparatus 60 instead of the power supply control apparatus 46 of the power supply system 31.

The power supply system 33 according to the modification example is different from the power supply system 31 in that the power supply control apparatus 60 includes the storage battery 42 in addition to the switches 51 and 52, the DCDC converter 53, and the control unit 54, and that the negative terminal of the storage battery 42 is grounded via the terminal T2.

In the power supply system 33 according to the modification example, each of the alternator 41, the storage batteries 42 and 43, the load 44, the starter 45, the switches 51 and 52, the DCDC converter 53, and the control unit 54 is connected in the same manner as the corresponding component in the power supply system 31, and acts in the same manner as the corresponding component in the power supply system 31. Also, the terminal T1 and the terminal T3 are detachably connected to the alternator 41 and the storage battery 43, respectively.

Therefore, the power supply control apparatus 60 acts in the same manner as the power supply control apparatus 46, and has the same advantageous effects as the power supply control apparatus 46.

In addition, when the power supply control apparatus 60 is removed from the power supply system 33, unlike when the power supply control apparatus 46 is removed from the power supply system 31, the storage battery 42 can be removed at the same time.

Note that in Embodiment 3 and the modification example, regarding the control unit 54, the configuration for determining whether or not the alternator 41 is generating regenerative electric power is not limited to the configuration for making the determination based on the speed of the vehicle indicated by the vehicle speed information acquired from the outside. For example, when the output voltage of the alternator 41 is different in the case where the alternator 41 generates electric power in conjunction with the engine and in the case where the alternator 41 generates regenerative electric power, the control unit 54 may determine whether or not the alternator 41 is generating regenerative electric power based on the voltage at the terminal T1.

Also, the configuration of the control unit 54 for acquiring the charge information is not limited to the configuration for acquiring it from the outside, and for example the control unit 54 may detect the open voltage of each of the storage batteries 42 and 43 and acquire the charge information based on the detected open voltages. Furthermore, the control unit 54 may acquire a piece of charge information indicating the SOC of the storage battery 42 and another piece of charge information indicating the SOC of the storage battery 43, separately.

Embodiment 4

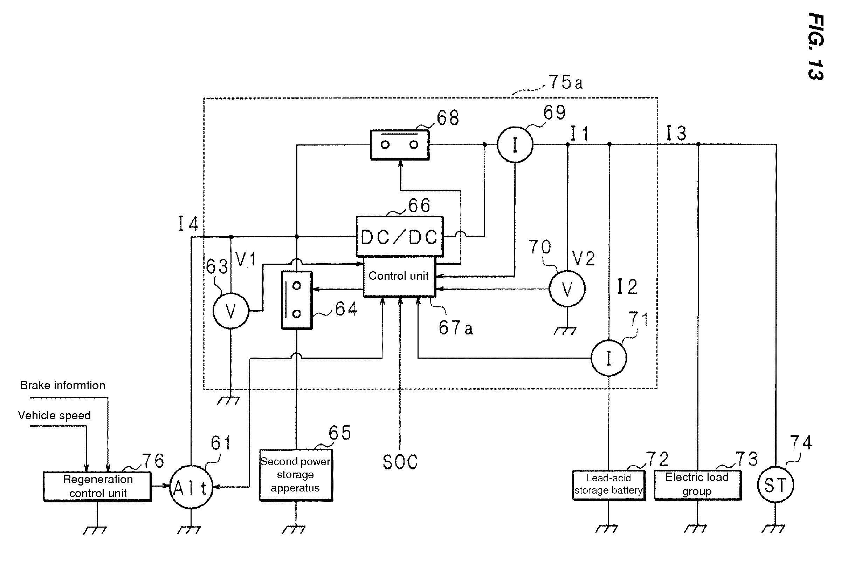

FIG. 13 is a block diagram showing a schematic configuration of Embodiment 4 of a charge control method, charge control apparatus, and power supply apparatus for vehicles according to the present invention.

In these charge control apparatus and power supply apparatus for vehicles, the regeneration control unit 76, to which the drive control system provides brake information indicating the operating conditions of the brake of the vehicle and vehicle speed information, performs regeneration control for the alternator (on-board power generator, AC power generator) 1 when braking the vehicle. The alternator 61 rectifies the electric power generated when braking the vehicle, and outputs it as DC power.

The electric power output by the alternator 61 is supplied to the DC/DC converter (voltage conversion means) 66, and also charges the second power storage apparatus 65 such as a storage battery, an electric double-layer capacitor, or the like, via a semiconductor relay 64. For the DC/DC converter 66, a control unit 67a performs voltage step-down or step-up control based on the input voltage detected by a built-in voltage sensor (not shown in the drawings) so that the output voltage will be appropriate. When the voltage step-down control and the voltage step-up control are unnecessary, the control unit 67a maintains the bypass relay 68 to be ON, which is connected to the DC/DC converter 66 in parallel.

The electric power from the DC/DC converter 66 or the bypass relay 68 charges the lead-acid storage battery 72, and is also supplied to the electric load group 73 and the starter 74, which are mounted on the vehicle. The electric power output by the lead-acid storage battery 72 is supplied to the electric load group 73 and the starter 74.

A voltage sensor 63 detects an input voltage value V1 to the DC/DC converter 66, and provides it to the control unit 67a. Note that a configuration in which the built-in voltage sensor of the DC/DC converter 66 doubles as the voltage sensor 63 may also be employed.

The control unit 67a is provided with the SOC (State Of Charge) information of the second power storage apparatus 65, by an engine control system, which is not shown in the drawings.

A current sensor 69 detects an electric current value I1 from the DC/DC converter 66 or the bypass relay 68 and provides it to the control unit 67a, and a voltage sensor 70 detects a voltage value V2 from the DC/DC converter 66 or the bypass relay 68 and provides it to the control unit 67a.

A current sensor 71 detects the input/output electric current value I2 of the lead-acid storage battery 72, and provides it to the control unit 67a. The control unit 67a is capable of turning ON the alternator 61 according to a predetermined condition at other than the time of braking the vehicle, and the alternator 61 thus turned ON is turned OFF by the regeneration control unit 76 according to the regeneration control, at the end of the braking of the vehicle.

The voltage sensor 63, the semiconductor relay 64, the DC/DC converter 66, the control unit 67a, the bypass relay 68, the current sensor 69, the voltage sensor 70, and the current sensor 71 constitute a charge control apparatus 75a.

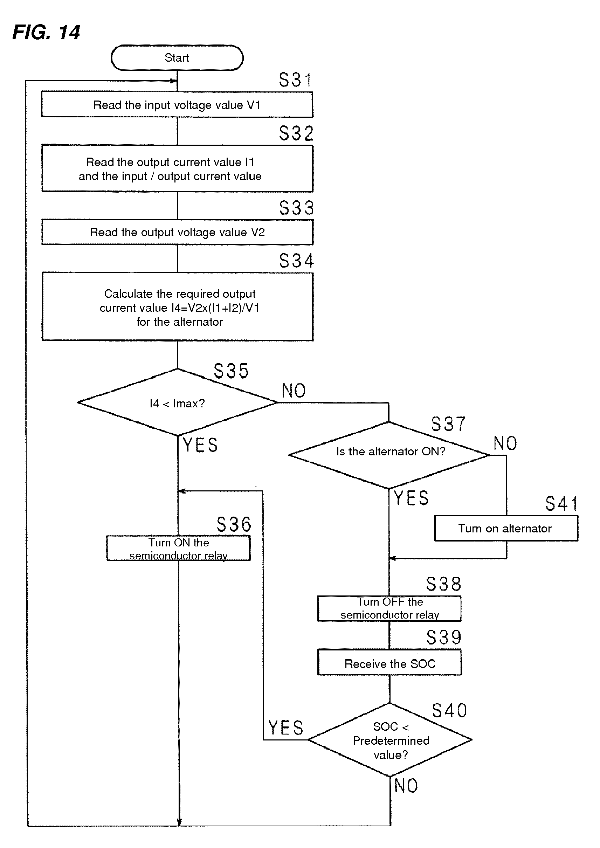

The following describes the operations of the charge control apparatus and power supply apparatus for vehicles having the stated configurations, with reference to the flowchart shown in FIG. 14, which illustrates the operations.

The control unit 67a first reads the input voltage value V1 to the DC/DC converter 66 detected by the voltage sensor 63 (S31), and then reads the output electric current value I1 from the DC/DC converter 66 or the bypass relay 68 detected by the current sensor 69 and the input/output electric current value I2 of the lead-acid storage battery 72 detected by the current sensor 71 (S32). Note that the input/output electric current value I2 of the lead-acid storage battery 72 is set to be a positive value regardless of whether the current is the input or the output, on the assumption that it is included in an electric current value I3 required by the lead-acid storage battery 72, the electric load group 73, and the starter 74.

Subsequently, the control unit 67a reads an output voltage value V2 from the DC/DC converter 66 or the bypass relay 68 detected by the voltage sensor 70 (S33), and calculates a required output current value I4 for the alternator 61 by the following formula, on the assumption that the input power of the charge control apparatus 75a is equal to the output power of the same (S34).

$$I4 = V2 \times (I1 + I2)/V1$$

Subsequently, the control unit 67a determines whether or not a previously-provided maximum output electric current value Imax of the alternator 61 is greater than the required output current value I4 for the alternator 61 thus calculated (S9), and when determining that it is greater, turns ON the semiconductor relay 64 (or maintains the ON state when it is already ON) (S36), and then reads the input voltage value V1 to the DC/DC converter 66 (S31). When the maximum output electric current value Imax is greater than the required output electric current value 14, the semiconductor relay 64 is maintained to be ON, for the reason that the second power storage apparatus 65 can be charged further.

When the maximum output electric current value Imax of the alternator 61 is not greater than the required output current value I4 (S35), the control unit 67a determines whether or not the alternator 61 is ON (S37), and turns OFF the semiconductor relay 64 when it is ON (S38). When the maximum output electric current value Imax is not greater than the required output current value 14, the semiconductor relay 64 is maintained to be OFF, for the reason that the second power storage apparatus 65 cannot be charged further. Note that the semiconductor relay 64 may be placed under PWM control at this moment, in order to suppress the charge current to the second power storage apparatus 65.

When the alternator 61 is not ON (S37), the control unit 67a turns ON the alternator 61 (S41), and then turns OFF the semiconductor relay 64 (S38).

After turning OFF the semiconductor relay 64 (S38), the control unit 67a receives the SOC information of the second power storage apparatus 65 from the engine control system (S39), and determines whether or not the value of the received SOC is smaller than a predetermined value (S40).

When the value of the SOC is smaller than the predetermined value (S40), the control unit 67a turns ON the semiconductor relay 64 (S36). When the value of the SOC is not smaller than the predetermined value (S40), the control unit 67a goes straight to read the input voltage value V1 to the DC/DC converter 66 (S31). As a result, the second power storage apparatus 65 is prevented from going into the state of overdischarge, or being left in the state of overdischarge.

Embodiment 5

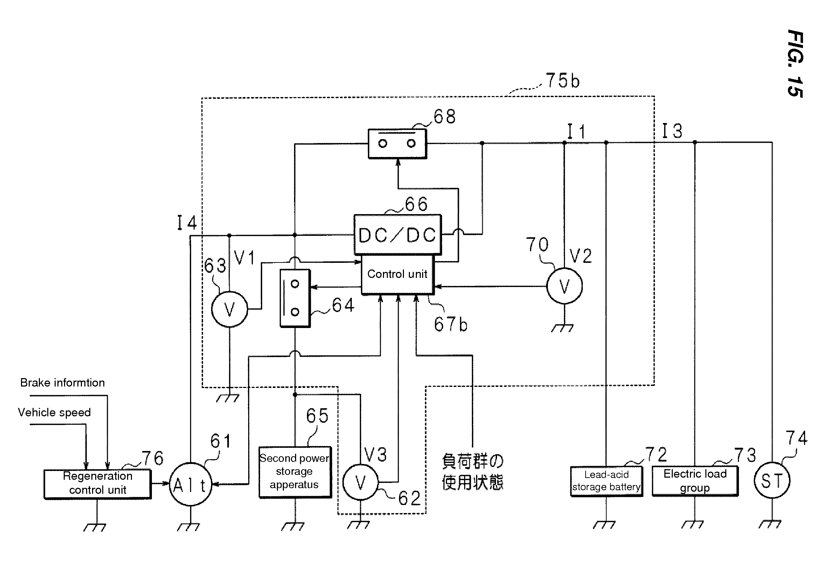

FIG. 15 is a block diagram showing a schematic configuration of Embodiment 5 of a charge control apparatus and a power supply apparatus for vehicles according to the present invention.

These charge control apparatus and power supply apparatus for vehicles do not include the current sensors 69 and 71 shown in FIG. 13, and a voltage sensor 62 detects an output voltage value V3 of the second power storage apparatus 65, and provides it to a control unit 67b. The control unit 67b is not provided with the SOC information, but is provided with information showing the usage state of the electric load group 73 from a drive control system not shown in the drawings.

The voltage sensors 62 and 63, the semiconductor relay 64, the DC/DC converter 66, the control unit 67b, the bypass relay 68, and the voltage sensor 70 constitute a charge control apparatus 75b. The other components are the same as the components described for Embodiment 4 (FIG. 13), and therefore the description thereof is omitted.

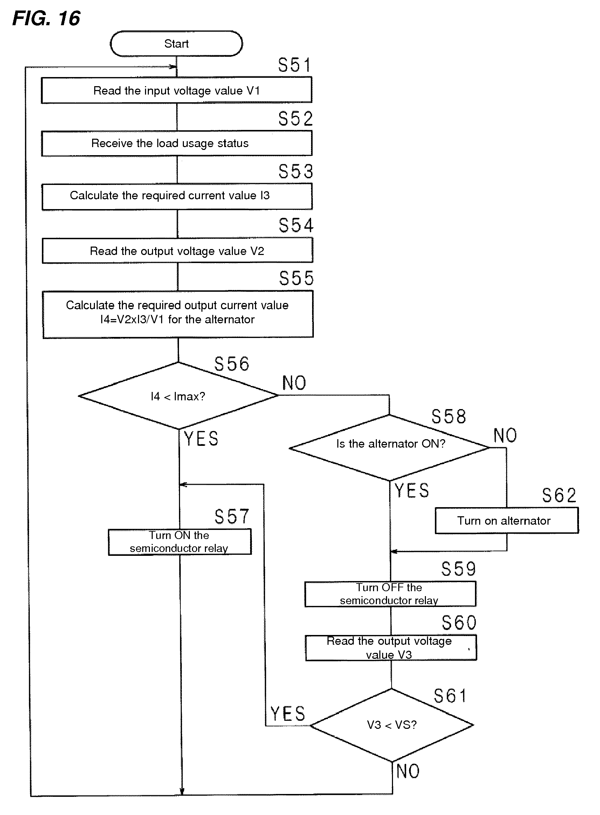

The following describes the operations of the charge control apparatus and the power supply apparatus for vehicles having the stated configurations, with reference to the flowchart shown in FIG. 16, which illustrates the operations.

The control unit 67b first reads the input voltage value V1 to the DC/DC converter 66 detected by the voltage sensor 63 (S51), and then receives the information indicating the usage state of the electric load group 73 from the drive control system (S52).

Subsequently, based on a previously-provided power consumption of each of the loads included in the electric load group 73 and the received information indicating the usage state of the electric load group 73 (S52), the control unit 67b calculates an electric current value I3 required by the lead-acid storage battery 72, the electric load group 73, and the starter 74 (S53). Note that, at this moment, after calculating the electric current value required by the electric load group 73 and the starter 74, the control unit 67b adds the electric current value for charging the lead-acid storage battery 72.

Subsequently, the control unit 67b reads an output voltage value V2 from the DC/DC converter 66 or the bypass relay 68 detected by the voltage sensor 70 (S54), and calculates a required output current value I4 for the alternator 61 by the following formula, on the assumption that the input power of the charge control apparatus 75b is equal to the output power of the same (S55).

$$I4 = V2 \times I3/V1$$

Subsequently, the control unit 67b determines whether or not a previously-provided maximum output electric current value Imax of the alternator 61 is greater than the required output current value I4 for the alternator 61 thus calculated (S56), and when determining that it is greater, turns ON the semiconductor relay 64 (or maintains the ON state when it is already ON) (S57), and then reads the input voltage value V1 to the DC/DC converter 66 (S51). When the maximum output electric current value Imax is greater than the required output current value 14, the semiconductor relay 64 is maintained to be ON, for the reason that the second power storage apparatus 65 can be charged further.

When the maximum output electric current value Imax of the alternator 61 is not greater than the required output current value I4 (S56), the control unit 67b determines whether or not the alternator 61 is ON (S58), and turns OFF the semiconductor relay 64 when it is ON (S59). When the maximum output electric current value Imax is not greater than the required output current value 14, the semiconductor relay 64 is maintained to be OFF, for the reason that the second power storage apparatus 65 cannot be charged further. Note that the semiconductor relay 64 may be placed under PWM control at this moment, in order to suppress the charge current to the second power storage apparatus 65.

When the alternator 61 is not ON (S58), the control unit 67b turns ON the alternator 61 (S62), and then turns OFF the semiconductor relay 64 (S59).

After turning OFF the semiconductor relay 64 (S59), the control unit 67b reads the output voltage value V3 of the second power storage apparatus 65 detected by the voltage sensor 62 (S60), and determines whether or not the read output voltage value V3 is lower than a predetermined voltage value VS (S61). Note that the voltage sensor 62 can detect the output voltage value V3 of the second power storage apparatus 65 only when the semiconductor relay 64 is in the OFF state (S59) or in the state under the PWM control (and during the OFF period thereof).

When the output voltage value V3 is lower than the predetermined voltage value VS (S61), the control unit 67b turns ON the semiconductor relay 64 (S57). When the output voltage value V3 is not lower than the predetermined voltage value VS (S61), the control unit 67b goes straight to read the input voltage value V1 to the DC/DC converter 66 (S51). The output voltage value V3 and SOC of the second power storage apparatus 65 are correlated to some extent, and as a result, the second power storage apparatus 65 is prevented from going into the state of overdischarge, or being left in the state of overdischarge.

The disclosed Embodiments 1 to 5 and the modification example are to be considered in all respects as illustrative and not limiting. The scope of the present invention is indicated by the claims rather than by the foregoing description, and all changes which come within the meaning and range of equivalency of the claims are intended to be embraced therein.

Industrial Applicability

The present invention is applicable to a power supply apparatus that is mounted in a vehicle such as an HEV (Hybrid Electric Vehicle) or an EV (Electric Vehicle).

Reference Signs List

| 1, 3 | Control apparatus |
| 10 | Switch |
| 11 | DCDC converter |
| 12 | Current detection unit |
| 14 | Control unit |
| 21 | Electric wire |
| 22 | Power generator |
| 23 | Storage battery |
| 30 | Voltage detection unit |
| 41 | Alternator (Power generator) |
| 42 | Storage battery (First storage battery) |
| 43 | Storage battery (Second storage battery) |
| 44 | Load |
| 46, 60 | Power supply control apparatus |
| 51 | Switch (First switch) |
| 52 | Switch (Second switch) |
| 53 | DCDC converter (Voltage transformer circuit) |
| 54 | Control unit (Acquisition means, Control means, Determination means, Driving means) |
| 61 | Alternator (On-board power generator) |
| 62, 63, 70 | Voltage sensor |
| 64 | Semiconductor relay (Switch) |
| 65 | Second power storage apparatus |
| 66 | DC/DC converter (Voltage conversion means) |
| 67a, 67b | Control unit |
| 69, 71 | Current sensor |
| 72 | Lead-acid storage battery |
| 73 | Electric load group |
| 74 | Starter |
| 75a, 75b | Charge control apparatus |
| 76 | Regeneration control unit |

**Claims**

1. A control apparatus that controls charging from a power generator to a storage battery, comprising:

a first charge channel and a second charge channel via which the power generator charges the storage battery;
a switch that is provided in the first charge channel;
a voltage step-up circuit that is provided in the second charge channel, steps up a voltage generated by the power generator, and applies the stepped-up voltage to the storage battery;
an electric current detection unit that detects a charge current to the storage battery; and
a control unit that controls the switch and the voltage step-up circuit so that, when a charge current value detected by the current detection unit becomes smaller than a predetermined value under a condition where the storage battery is being charged via the first charge channel, charging to the storage battery is switched to charging via the second charge channel.

2. The control apparatus according to claim 1, wherein a value of current generated by the power generator is limited to be equal to or smaller than the predetermined value.

3. A control apparatus that controls charging from a power generator to a storage battery, comprising:

a first charge channel and a second charge channel via which the power generator charges the storage battery;
a switch that is provided in the first charge channel;
a voltage step-up circuit that is provided in the second charge channel, steps up a voltage generated by the power generator, and applies the stepped-up voltage to the storage battery;
a voltage detection unit that detects a voltage at each of two ends of an electric wire connected to the first charge channel and the second charge channel; and
a control unit that controls the switch and the voltage step-up circuit so that, when a calculation value calculated based on voltage values detected by the voltage detection unit becomes smaller than a predetermined value under a condition where the storage battery is being charged via the first charge channel, charging to the storage battery is switched to charging via the second charge channel.

4. The control apparatus according to claim 3, wherein a value of an electric current generated by the power generator has an upper limit, and the predetermined value is a calculation value calculated based on voltage values detected by the voltage detection unit when an electric current having the upper limit value flows through the electric wire.

5. A power supply control apparatus that controls power supply from a power generator to a first storage battery, a second storage battery, and a load, and power supply from the first storage battery to the load, comprising:

a first switch that is provided on a power supply channel from the power generator to the first storage battery;
a second switch that is provided on a power supply channel from the power generator to the second storage battery and the load;
a voltage transformer circuit that is provided between a connection node, which is between the first storage battery and the first switch, and the load, transforms an output voltage of the power generator or the first storage battery, and applies the transformed voltage to the load;

an acquisition means for acquiring first remaining capacity information and second remaining capacity information respectively indicating a remaining capacity of the first storage battery and a remaining capacity of the second storage battery; and

a control means for controlling turning ON/OFF of each of the first switch and the second switch and activation/deactivation of the voltage transformer circuit, according to the remaining capacities indicated by the first remaining capacity information and the second remaining capacity information acquired by the acquisition means.

6. The power supply control apparatus according to claim 5, comprising

a determination means for determining whether or not the power generator is generating regenerative electric power,

wherein the control means is configured to control turning ON/OFF of each of the first switch and the second switch and activation/deactivation of the voltage transformer circuit, according to a result of a determination made by the determination means and the remaining capacities indicated by the first remaining capacity information and the second remaining capacity information acquired by the acquisition means.

7. The power supply control apparatus according to claim 6,

wherein the control means is configured to, in a case where the determination means determines that regenerative electric power is being generated, turn ON both the first switch and the second switch and deactivate the voltage transformer circuit when the remaining capacity indicated by the first remaining capacity information acquired by the acquisition means is smaller than a first predetermined value and the remaining capacity indicated by the second remaining capacity information acquired by the acquisition means is smaller than a second predetermined value.

8. The power supply control apparatus according to claim 6 or 7,

wherein the control means is configured to, in a case where the determination means determines that regenerative electric power is being generated, turn ON the first switch, turn OFF the second switch, and activate the voltage transformer circuit when the remaining capacity indicated by the first remaining capacity information acquired by the acquisition means is smaller than a first predetermined value and the remaining capacity indicated by the second remaining capacity information acquired by the acquisition means is equal to or greater than a second predetermined value.

9. The power supply control apparatus according to any one of claims 6 to 8,

wherein the control means is configured to, in a case where the determination means determines that regenerative electric power is being generated, turn OFF the first switch, turn ON the second switch, and deactivate the voltage transformer circuit when the remaining capacity indicated by the first remaining capacity information acquired by the acquisition means is equal to or greater than a first predetermined value and the remaining capacity indicated by the second remaining capacity information acquired by the acquisition means is smaller than a second predetermined value.

10. The power supply control apparatus according to any one of claims 6 to 9,

wherein the control means is configured to, in a case where the determination means determines that regenerative electric power is being generated, turn OFF both the first switch and the second switch and activate the voltage transformer circuit when the remaining capacity indicated by the first remaining capacity information acquired by the acquisition means is equal to or greater than a first predetermined value and the remaining capacity indicated by the second remaining capacity information acquired by the acquisition means is equal to or greater than a second predetermined value.

11. The power supply control apparatus according to any one of claims 6 to 10, comprising

a driving means for, in a case where the determination means determines that regenerative electric power is not being generated, driving the power generator when the remaining capacity indicated by the first remaining capacity information acquired by the acquisition means is smaller than a first predetermined value and the remaining capacity indicated by the second remaining capacity information acquired by the acquisition means is smaller than a second predetermined value,

wherein the control means is configured to, in a case where the determination means determines that regenerative electric power is not being generated, turn ON both the first switch and the second switch and deactivate the voltage transformer circuit when the remaining capacity indicated by the first remaining capacity information acquired by the acquisition means is smaller than a first predetermined value and the remaining capacity indicated by the second remaining capacity information acquired by the acquisition means is smaller than a second predetermined value.

**12.** The power supply control apparatus according to any one of claims 6 to 11,
wherein the control means is configured to, in a case where the determination means determines that regenerative electric power is not being generated, turn OFF both the first switch and the second switch and deactivate the voltage transformer circuit when the remaining capacity indicated by the first remaining capacity information acquired by the acquisition means is smaller than a first predetermined value and the remaining capacity indicated by the second remaining capacity information acquired by the acquisition means is equal to or greater than a second predetermined value.

**13.** The power supply control apparatus according to any one of claims 6 to 12,
wherein the control means is configured to, in a case where the determination means determines that regenerative electric power is not being generated, turn OFF both the first switch and the second switch and activate the voltage transformer circuit when the remaining capacity indicated by the first remaining capacity information acquired by the acquisition means is equal to or greater than a first predetermined value.

**14.** A charge control method for a charge control apparatus,
the charge control apparatus comprising:

a voltage conversion means for converting, as needed, a voltage generated and output by an on-board power generator, providing the converted voltage to an electric load group, and charging a power storage apparatus with the converted voltage, the on-board power generator generating electric power when braking the vehicle;
a means for detecting an input voltage value V1 to the voltage conversion means;
a voltage detection means and an electric current detection means for detecting an output voltage value V2 and an output electric current value I1 of the voltage conversion means, respectively; and
a means for detecting an input/output electric current value I2 of the power storage apparatus, wherein the charge control apparatus controls charging to a second power storage apparatus that is charged with a voltage generated and output by the on-board power generator,

the charge control method comprising:

preparing a switch that turns ON/OFF charging to the second power storage apparatus;
calculating an electric current value I3 required by the power storage apparatus and the electric load group, based on I1 and I2;
calculating an electric current value I4 to be output by the on-board power generator, based on V2, V1, and I3;
determining whether or not I4 so calculated is greater than a previously-provided maximum output electric current value of the on-board power generator; and
when determining that I4 is greater than the maximum output electric current value, turning OFF the switch or performing PWM control.

**15.** A charge control apparatus comprising:

a voltage conversion means for converting, as needed, a voltage generated and output by an on-board power generator, providing the converted voltage to an electric load group, and charging a power storage apparatus with the converted voltage, the on-board power generator generating electric power when braking the vehicle;
a means for detecting an input voltage value V1 to the voltage conversion means;
a voltage detection means and an electric current detection means for detecting an output voltage value V2 and an output electric current value I1 of the voltage conversion means, respectively; and
a means for detecting an input/output electric current value I2 of the power storage apparatus, wherein the charge control apparatus controls charging to a second power storage apparatus that is charged with a voltage generated and output by the on-board power generator,
the charge control apparatus comprising:

a switch that turns ON/OFF charging to the second power storage apparatus;
a means for calculating an electric current value I3 required by the power storage apparatus and the electric load group, based on I1 and I2;
a means for calculating an electric current value I4 to be output by the on-board power generator, based on V2, V1, and I3; and
a determination means for determining whether or not I4 calculated by the means is greater than a previously-provided maximum output electric current value of the on-board power generator,
wherein the charge control apparatus is configured such that, when the determination means determines that I4 is greater than the maximum output electric current value, the switch is turned OFF or PWM control is performed.

**16.** A charge control apparatus comprising:

a voltage conversion means for converting, as needed, a voltage generated and output by an on-board power generator, providing the converted voltage to an electric load group, and charging a power storage apparatus with the converted voltage, the on-board power generator generating electric power when braking the vehicle;
a means for detecting an input voltage value V1 to the voltage conversion means; and
a means for detecting an output voltage value V2 of the voltage conversion means,
wherein the charge control apparatus controls charging to a second power storage apparatus that is charged with a voltage generated and output by the on-board power generator,

the charge control apparatus comprising:

a switch that turns ON/OFF charging to the second power storage apparatus;
a means for receiving a usage state of the electric load group from an outside;
a means for calculating an electric current value I3 required by the power storage apparatus and the electric load group, based on the usage state received by the means and a previously-provided power consumption of each of loads included in the electric load group;
a means for calculating an electric current value I4 to be output by the on-board power generator, based on V2, V1, and I3; and
a determination means for determining whether or not I4 calculated by the means is greater than a previously-provided maximum output electric current value of the on-board power generator, wherein the charge control apparatus is configured such that, when the determination means determines that I4 is greater, the switch is turned OFF or PWM control is performed.

**17.** The charge control apparatus according to claim 15 or 16, further comprising a means for determining whether or not the on-board power generator is generating electric power when the determination means determines that I4 is greater,
wherein the charge control apparatus is configured such that, when the means determines that the on-board power generator is not generating electric power, the on-board power generator is caused to generate electric power.

**18.** The charge control apparatus according to any one of claims 15 to 17, further comprising:

a means for detecting an output voltage value V3 of the second power storage apparatus; and
a means for determining whether or not V3 detected by the means is lower than a predetermined voltage value,
wherein the charge control apparatus is configured such that, when the means determines that V3 is lower, the switch is turned ON.

**19.** The charge control apparatus according to any one of claims 15 to 17, further comprising:

a means for receiving a remaining capacity of the second power storage apparatus from an outside; and
a means for determining whether or not the remaining capacity received by the means is lower than a predetermined capacity,
wherein the charge control apparatus is configured such that, when the means determines that the remaining capacity is lower, the switch is turned ON.

**20.** A power supply apparatus for vehicles, comprising:

an on-board power generator that generates electric power when braking the vehicle;
a power storage apparatus;
a second power storage apparatus; and
a charge control apparatus according to any one of claims 15 to 19.

*FIG. 1*

*FIG. 2*

```
              ┌──────────────┐
             (     Start      )
              └──────┬───────┘
                     │
          ┌──────────────────────┐
          │   Turn ON the switch  │ S1
          └──────────┬───────────┘
                     │
                     ▼◄──────────────────────┐
          ┌──────────────────────┐           │
          │ Read the charge current value │ S2 │
          └──────────┬───────────┘           │
                     │                        │
                    S3                        │
                  ╱─────╲                     │
                ╱ Charge  ╲                   │
              ╱  current   ╲    NO            │
             ⟨ value < Upper ⟩──────────────┘
              ╲ limit value? ╱
                ╲─────────╱
                     │ YES
                     │
          ┌──────────────────────┐
          │   Turn OFF the switch │ S4
          └──────────┬───────────┘
                     │
                     ▼◄──────────────────────────────┐
          ┌──────────────────────┐                   │
          │     Voltage step-up   │ S5                │
          └──────────┬───────────┘                   │
                     │                                │
          ┌──────────────────────┐                   │
          │ Read the applied voltage value │ S6       │
          └──────────┬───────────┘                   │
                     │                                │
                    S7                                │
                  ╱─────╲                             │
                ╱ Applied ╲                           │
              ╱  voltage   ╲   YES                    │
             ⟨ value < Full-charge ⟩──────────┐       │
              ╲ voltage value? ╱              │       │
                ╲─────────╱                   ▼       │
                     │ NO          ┌──────────────────────┐
                     │             │ Read the charge current value │ S8
          ┌──────────────────────┐ └──────────┬───────────┘
          │  Stop voltage step-up │ S9         │
          └──────────┬───────────┘◄───────────┘
                     │
              ┌──────────────┐
             (      End       )
              └──────────────┘
```

*FIG. 3*

## FIG. 4

*FIG. 5*

```
                    ┌─────────────┐
                    │    Start    │
                    └──────┬──────┘
                           │
          ┌────────────────────────────────┐
          │      Turn ON the switch         │ S10
          └────────────────┬───────────────┘
                           │
          ┌────────────────────────────────┐
          │ Read the voltage value at the  │ S11
          │ one end of the electric wire 21│
          │  on the side of the DCDC       │
          │         converter               │
          └────────────────┬───────────────┘
                           │
          ┌────────────────────────────────┐
          │   Read the charge value of      │ S12
          │       the difference            │
          └────────────────┬───────────────┘
                           │
          ┌────────────────────────────────┐
          │    Calculate the value of       │ S13
          │       the difference            │
          └────────────────┬───────────────┘
                           │        S14
                    ◇ Value of difference ◇  NO
                    ◇   < Reference value ◇ ──────┐
                           │ YES
          ┌────────────────────────────────┐
          │     Turn OFF the switch          │ S15
          └────────────────┬───────────────┘
                           │
          ┌────────────────────────────────┐
          │      Voltage step-up            │ S16
          └────────────────┬───────────────┘
                           │
          ┌────────────────────────────────┐
          │   Read charge voltage value     │ S17
          └────────────────┬───────────────┘
                           │        S18
                    ◇ Charge voltage value ◇  YES
                    ◇ < Full-charge        ◇ ────┐
                    ◇   voltage value?      ◇
                           │ NO
          ┌────────────────────────────────┐
          │    Stop voltage step-up         │ S21
          └────────────────┬───────────────┘
                           │
                    ┌─────────────┐
                    │     End     │
                    └─────────────┘

          ┌────────────────────────────────┐
          │ Read the voltage value at the  │ S19
          │ one end of the electric wire 21│
          │  on the side of the DCDC       │
          │         converter               │
          └────────────────┬───────────────┘
                           │
          ┌────────────────────────────────┐
          │ Calculate the value of the      │ S20
          │        difference               │
          └────────────────────────────────┘
```

FIG. 6

*FIG. 7*

Control in the case where it is determined that regenerative electric
power is being generated

| | | SOC of the storage of battery 43 | |
|---|---|---|---|
| | | Less than the first reference value | Equal to or greater than the first reference value |
| SOC of the storage of battery 42 | Less than the first reference value | Switch 51: ON<br>Switch 52: ON<br>DCDC converter 53: Deactivated | Switch 51: ON<br>Switch 52: OFF<br>DCDC converter 53: Activated |
| | Equal to or greater than the first reference value | Switch 51: OFF<br>Switch 52: ON<br>DCDC converter 53: Deactivated | Switch 51: OFF<br>Switch 52: OFF<br>DCDC converter 53: Activated |

*FIG. 8*

# FIG. 9

31

Power supply control apperatus 46

Control unit 54

Vehicle speed information

Charge information

DCDC converter 53

52

51

T1

T2

T3

ALT 41

Storage battery 42

Storage battery 43

Load 44

ST 45

FIG. 10

*FIG. 11*

Control in the case where it is determined that regenerative electric power is
not being generated

| | | SOC of the storage of battery 43 | |
|---|---|---|---|
| | | Less than the first reference value | Equal to or greater than the first reference value |
| SOC of the storage of battery 42 | Less than the first reference value | Switch 51: ON<br>Switch 52: ON<br>DCDC converter 53: Deactivated | Switch 51: ON<br>Switch 52: OFF<br>DCDC converter 53: Activated |
| | Equal to or greater than the first reference value | Switch 51: OFF<br>Switch 52: ON<br>DCDC converter 53: Deactivated | Switch 51: OFF<br>Switch 52: OFF<br>DCDC converter 53: Activated |

FIG. 12

**FIG. 13**

**FIG. 14**

```
                    ┌──────────────┐
                    │    Start     │
                    └──────────────┘
                           │              S31
         ┌─────────────────────────────────────┐
         │     Read the input voltage value V1  │
         └─────────────────────────────────────┘
                           │              S32
         ┌─────────────────────────────────────┐
         │     Read the output current value I1 │
         │     and the input / output current value │
         └─────────────────────────────────────┘
                           │              S33
         ┌─────────────────────────────────────┐
         │     Read the output voltage value V2 │
         └─────────────────────────────────────┘
                           │              S34
         ┌─────────────────────────────────────┐
         │     Calculate the required output    │
         │     current value I4=V2x(I1+I2)/V1   │
         │     for the alternator               │
         └─────────────────────────────────────┘
                           │
                         S35
                      ◇ I4 < Imax? ◇ ──NO──►
                           │
                          YES                    S37
                           │              ◇ Is the alternator ON? ◇ ──NO──►
                           │                         │
                           │                        YES           S41
                         S36                          │      ┌──────────────────┐
                   ┌──────────────┐                   │      │ Turn on alternator │
                   │ Turn ON the  │                   │      └──────────────────┘
                   │ semiconductor relay │            │
                   └──────────────┘                   │      S38
                                              ┌──────────────────┐
                                              │ Turn OFF the     │
                                              │ semiconductor relay │
                                              └──────────────────┘
                                                     │      S39
                                              ┌──────────────────┐
                                              │ Receive the SOC  │
                                              └──────────────────┘
                                                     │      S40
                                    ◄──YES──◇ SOC < Predetermined value? ◇
                                                     │
                                                    NO
```

Calculate the required output current value $I4=V2 \times (I1+I2)/V1$ for the alternator

I4 < Imax?

Is the alternator ON?

SOC < Predetermined value?

*FIG. 15*

負荷群の
使用状態

**FIG. 16**

```
                        Start
                                        S51
        Read the input voltage value V1
                                        S52
        Receive the load usage status
                                        S53
      Calculate the required current value I3
                                        S54
        Read the output voltage value V2
                                        S55
     Calculate the required output current value
          I4=V2xI3/V1 for the alternator

                        S56
                                    NO
                  I4 < Imax?
                                            S58
                                                        NO
                   YES            Is the alternator ON?

                                         YES              S62

            S57                                    Turn on alternator
        Turn ON the
     semiconductor relay
                                                  S59
                                          Turn OFF the
                                        semiconductor relay
                                                  S60
                                        Read the output voltage
                                             value V3
                                                  S61
                                 YES
                                             V3 < VS?

                                                 NO
```

*FIG. 17*

EP 2 983 270 A1

## INTERNATIONAL SEARCH REPORT

| | International application No. |
|---|---|
| | PCT/JP2014/057962 |

A. CLASSIFICATION OF SUBJECT MATTER
*H02J7/10*(2006.01)i, *B60L11/14*(2006.01)i, *B60L11/18*(2006.01)i, *H01M10/44*(2006.01)i, *H01M10/48*(2006.01)i, *H02M3/155*(2006.01)i

According to International Patent Classification (IPC) or to both national classification and IPC

B. FIELDS SEARCHED

Minimum documentation searched (classification system followed by classification symbols)
H02J7/10, B60L11/14, B60L11/18, H01M10/44, H01M10/48, H02M3/155

Documentation searched other than minimum documentation to the extent that such documents are included in the fields searched
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2007-336664 A (Mitsumi Electric Co., Ltd.),<br>27 December 2007 (27.12.2007),<br>paragraphs [0059] to [0063]; fig. 4, 10, 11<br>& US 2010/0188051 A1 & WO 2007/145240 A1<br>& CN 101467329 A | 1-2<br>3-4 |
| Y | JP 2003-189462 A (Mitsubishi Cable Industries,<br>Ltd.),<br>04 July 2003 (04.07.2003),<br>paragraph [0012]; fig. 1<br>(Family: none) | 3-4 |
| X<br>A | JP 2012-075280 A (Panasonic Corp.),<br>12 April 2012 (12.04.2012),<br>paragraphs [0018] to [0039], [0065] to [0085];<br>fig. 2 to 3, 7<br>(Family: none) | 5-6,13<br>7-12 |

| ☒ Further documents are listed in the continuation of Box C. | ☐ See patent family annex. |
|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>    02 June, 2014 (02.06.14) | Date of mailing of the international search report<br>    10 June, 2014 (10.06.14) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2014/057962 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2002-171691 A  (Denso Corp.), 14 June 2002 (14.06.2002), paragraphs [0006] to [0018]; fig. 1, 5 (Family: none) | 5-13 |
| A | JP 2011-182540 A  (Mitsubishi Electric Corp.), 15 September 2011 (15.09.2011), entire text; all drawings (Family: none) | 14-20 |
| A | JP 2009-130961 A  (Denso Corp.), 11 June 2009 (11.06.2009), entire text; all drawings & US 2009/0127930 A1     & DE 102008057074 A1 | 14-20 |

Form PCT/ISA/210 (continuation of second sheet) (July 2009)

**INTERNATIONAL SEARCH REPORT**

International application No.

PCT/JP2014/057962

---

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:

The technical feature common to the invention in claim 1, the invention in claim 5, and the invention in claim 14 is "charging a storage battery from a power generator", and "comprising a voltage conversion means (a boosting circuit, a transformation circuit)".

However, the above-said technical feature cannot be considered to be a special technical feature, since the technical feature does not make a contribution over the prior art in the light of the contents disclosed in the following document (JP 2002-171691 A (Denso Corp.), 14 June 2002 (14.06.2002), paragraphs [0006] to [0018]; fig. 1, 5).
(Continued to extra sheet)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

**INTERNATIONAL SEARCH REPORT**

| International application No. |
| --- |
| PCT/JP2014/057962 |

Continuation of Box No.III of continuation of first sheet(2)

Further, there is no other same or corresponding special technical feature among these inventions.

Accordingly, the following three inventions (invention groups) are involved in claims.

(Invention 1) the inventions of claims 1-4

A technique for performing control such that a storage battery is charged via a second charging path when a charging current value becomes less than a predetermined value while the storage battery is being charged via a first charging path.

(Invention 2) the inventions of claims 5-13

A technique for controlling the on/off of each of first and second switches, and the operation/stop of a transformation circuit according to the remaining capacities of first and second storage batteries.

(Invention 3) the inventions of claims 14-20

A technique for turning off or PWM-controlling a switch (a switch for turning on/off charging of a second power storage device) when a current value to be outputted by a vehicle-mounted power generator has been determined to be larger than a previously given maximum output current value of the vehicle-mounted power generator.

Form PCT/ISA/210 (extra sheet) (July 2009)

**EP 2 983 270 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012240487 A

- JP 2011176958 A